(19)

Europäisches
Patentamt
European
Patent Office
Office européen
des brevets

(11) **EP 3 805 324 A1**

(12) **EUROPEAN PATENT APPLICATION**
published in accordance with Art. 153(4) EPC

(43) Date of publication:
**14.04.2021 Bulletin 2021/15**

(21) Application number: **19811639.4**

(22) Date of filing: **16.05.2019**

(51) Int Cl.:
**C09D 17/00** (2006.01)　　　**B01F 9/22** (2006.01)
**C09C 3/04** (2006.01)　　　**C09C 3/10** (2006.01)
**C09D 11/322** (2014.01)

(86) International application number:
**PCT/JP2019/019470**

(87) International publication number:
**WO 2019/230415 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2018 JP 2018101478
17.07.2018 JP 2018134122**

(71) Applicant: **DIC Corporation
Tokyo 174-8520 (JP)**

(72) Inventors:
• **SUGO Kenji
  Kitaadachi-gun, Saitama 362-8577 (JP)**
• **HAYAKAWA Kohei
  Kitaadachi-gun, Saitama 362-8577 (JP)**
• **OKADA Shinichi
  Kitaadachi-gun, Saitama 362-8577 (JP)**
• **SATO Yoshihiro
  Kitaadachi-gun, Saitama 362-8577 (JP)**

(74) Representative: **Beckmann, Claus
Kraus & Weisert
Patentanwälte PartGmbB
Thomas-Wimmer-Ring 15
80539 München (DE)**

(54) **METHOD FOR PRODUCING PIGMENT-KNEADED PRODUCT AND AQUEOUS PIGMENT DISPERSION**

(57)　A problem to be solved by the present invention is to provide a method for producing a pigment-kneaded product that can be used for the production of an aqueous pigment dispersion having an extremely small volume-average particle diameter of a dispersed substance, including a small number of coarse particles even in the initial stage of production, and being excellent in terms of preservation stability and that can be used for the production of ink having excellent initial discharge stability and favorable temporal discharge stability which prevent the clogging of ink discharge nozzles or the like in the initial stage of ink discharge. The present inventors solved the problem by a method for producing a pigment-kneaded product having a step [1] of supplying at least a pigment and a resin to a container provided in a kneading apparatus and a step [2] of kneading the resulting content (content (a1)) present in the container until a storage elastic modulus of content (a1) at an angular frequency of 1 rad/s, which is obtained by measurement of dynamic viscoelasticity at 25°C, reaches a range of 200 kPa to 30,000 kPa.

**EP 3 805 324 A1**

## Description

Technical Field

The present invention relates to a method for producing a pigment-kneaded product and an aqueous pigment dispersion that can be used in, for example, the production of ink.

Background Art

Inkjet printing methods are employed in situations for producing a variety of printed matters. The inkjet printing method is usually a method in which ink is discharged from ink discharge nozzles and landed on the surface of a recording medium such as paper or fabric to produce printed matters. Therefore, ink is demanded not to easily clog ink discharge nozzles from the initial stage of discharging and to have discharge stability that prevents the clogging of ink discharge nozzles or a change in the ink discharge direction, which happens over time.

Aqueous ink for the inkjet printing is usually produced by supplying a binder resin, a water-soluble solvent, an aqueous medium, or the like as necessary to an aqueous pigment dispersion in which a pigment has been dispersed in advance in an aqueous medium and mixing the components. Therefore, in order to impart the ink with favorable discharge stability, it is important to use, for example, an aqueous pigment dispersion capable of reducing the generation of coarse particles attributed to the pigment or capable of preventing the sedimentation of the pigment or the like over time, which can be a cause for the clogging of ink discharge nozzles.

As aqueous pigment dispersions capable of reducing the generation of the coarse particles or capable of preventing the sedimentation of the pigment or the like over time, known is, for example, an aqueous pigment dispersion liquid for which a mixture containing at least a resin having an anionic group, a pigment, and a basic compound is kneaded in a kneading apparatus of a closed system and a solid or semi-solid kneaded product is used (for example, refer to Patent Literature 1) .

However, in highly-densified miniaturized ink discharge nozzles that can be used for the production of high-definition printed matters, due to the influence of an extremely small amount of coarse particles or a sediment in ink, the clogging of the ink discharge nozzles or the abnormal discharge of ink is likely to occur even in the initial stage of ink discharge, and consequently, there is a case where a stripe or the like is generated on a printed matter.

Particular, in a single pass-mode inkjet printing method in which a line head is usually used, compared with a so-called multipass-mode (scan-mode) inkjet printing method, there is a case where the degradation of image quality attributed to the clogging of ink discharge nozzles or the like is likely to occur even in the initial state of ink discharge.

As described above, there has been a demand in industrial circles for a capability of effectively suppressing the generation of coarse particles or a sediment in ink that acts as a cause for the clogging of ink discharge nozzles, which are miniaturized to be available for the production of high-definition printed matters, in the initial stage of ink discharge; however, in the related art, there has been a case where techniques fell just one step short of the demanded performance.

In addition, even in a case where it is possible to, practically, sufficiently suppress the formation of coarse particles large enough to cause the clogging of ink discharge nozzles or the like in the initial stage of ink discharge, there is a case where an aqueous pigment dispersion or the ink contains particles that agglomerate over time and are thereby capable of coarsening. These particles form coarse particles or a sediment over time, and there is a case where the coarse particles or the sediment causes the clogging of ink discharge nozzles or the like over time.

Citation List

Patent Literature

PTL 1: JP-A-2003-226832

Summary of Invention

Technical Problem

A problem to be solved by the present invention is to provide a method for producing a pigment-kneaded product that can be used for the production of an aqueous pigment dispersion having an extremely small volume-average particle diameter of a dispersed substance, including a small number of coarse particles even in the initial stage of production, and being excellent in terms of preservation stability and that can be used for the production of ink having excellent initial discharge stability and favorable temporal discharge stability which prevent the clogging of ink discharge nozzles or the like in the initial stage of ink discharge.

In addition, another problem to be solved by the present invention is to provide a method for producing an aqueous pigment dispersion that has an extremely small volume-average particle diameter of a dispersed substance, is excellent in terms of preservation stability which can prevent the occurrence of the sedimentation of coarse particles, a pigment, or the like over time, is capable of preventing the occurrence of the sedimentation of coarse particles, a pigment, or the like over time in ink, and can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

Solution to Problem

The present inventors solved the problem by a method for producing a pigment-kneaded product, including a step [1] of supplying at least a pigment and a resin to a container provided in a kneading apparatus and a step [2] of kneading the resulting content (content (a1)) present in the container until a storage elastic modulus of content (a1) at an angular frequency of 1 rad/s, which is obtained by measurement of dynamic viscoelasticity at 25°C, reaches a range of 200 kPa to 30, 000 kPa.

In addition, the present inventors achieved the object by a method for producing an aqueous pigment dispersion, including a step [1] of supplying at least a pigment and a resin to a container provided in a kneading apparatus, a step [2] of kneading the resulting content (content (a1)) present in the container until a storage elastic modulus of content (a1) at an angular frequency of 1 rad/s, which is obtained by measurement of dynamic viscoelasticity at 25°C, reaches a range of 200 kPa to 30,000 kPa to prepare a pigment-kneaded product, and a step [3] of mixing the pigment-kneaded product with an aqueous medium.

In addition, the present inventors achieved the object by a method for producing an aqueous pigment dispersion, including a step [1] of supplying at least a pigment and a resin to a container provided in a kneading apparatus, a step [2] of kneading the resulting content (component (a1)) present in the container until a storage elastic modulus of component (a1) at an angular frequency of 1 rad/s, which is obtained by measurement of dynamic viscoelasticity at 25°C, reaches a range of 200 kPa to 30,000 kPa to prepare a pigment-kneaded product, a step [3] of mixing the pigment-kneaded product with an aqueous medium to prepare an aqueous pigment dispersion, and a step [4] of centrifugally separating the aqueous pigment dispersion obtained by the step [3] at 30°C to 70°C.

Advantageous Effects of Invention

A pigment-kneaded product obtained by the production method of the present invention can be used for the production of an aqueous pigment dispersion having an extremely small volume-average particle diameter of a dispersed substance, including a small number of coarse particles even in the initial stage of production, and being excellent in terms of preservation stability and can be used for the production of ink having excellent initial discharge stability and favorable temporal discharge stability which prevent the clogging of ink discharge nozzles or the like in the initial stage of ink discharge.

In addition, an aqueous pigment dispersion obtained using the pigment-kneaded product has an extremely small volume-average particle diameter of a dispersed substance, is excellent in terms of preservation stability which can prevent the occurrence of the sedimentation of coarse particles, a pigment, or the like over time, is capable of preventing the occurrence of the sedimentation of coarse particles, a pigment, or the like over time in ink, and can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

Description of Embodiments

A method for producing a pigment-kneaded product of the present invention has a step [1] of supplying at least a pigment and a resin to a container provided in a kneading apparatus and a step [2] of kneading the resulting content (content (a1)) present in the container until a storage elastic modulus of content (a1) at an angular frequency of 1 rad/s, which is obtained by measurement of dynamic viscoelasticity at 25°C, reaches a range of 200 kPa to 30,000 kPa.

The step [1] is a step of supplying a pigment, a resin, and a different component as necessary to the container provided in the kneading apparatus. In the container that has undergone the step [1], the content (a1) containing at least the pigment and the resin is present. The content (a1) may include optional components such as a basic compound, a solvent such as a water-soluble organic solvent or water, a pigment derivative, and a surfactant, as necessary.

The non-volatile content of the content (a1) is preferably 50% by mass or more, more preferably 50% by mass to 90% by mass, and particularly preferably 50% by mass to 85% by mass.

Here, the non-volatile content refers to a value calculated based on the mass[1] of a component remaining after 1 g of the content (a1) is heated at 175°C for four hours under a reduced pressure condition of 3 hPa, the mass[0] of the content (a1) before heating, and a formula [mass[1]/mass[0]] x 100.

The use of the content (a1) having the non-volatile content of 50% by mass or more maintains the viscosity of the content (a1) under kneading appropriately high and increases shear that is applied from the kneading apparatus to the content (a1), whereby it is possible to cause the pulverization of an agglomerate of the pigment and the adsorption of the resin to the pigment to efficiently proceed in parallel. As a result, it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

The pigment that is contained in the content (a1) is not particularly limited, and a well-known organic pigment or inorganic pigment can be used. Particularly, in the case of obtaining a pigment-kneaded product and an aqueous pigment dispersion that can be used for the production of ink for inkjet printing, as the pigment, it is possible to use, for example, iron oxide, carbon black produced by a well-known method such as a contact method, a furnace method, or a thermal method, an inorganic pigment such as titanium oxide, an azo pigment (including an insoluble azo pigment such as a monoazo pigment, a disazo pigment, or a pyrazolone pigment, a benzimidazolone pigment, a beta-naphthol pigment, a naphthol AS pigment, a condensed azo pigment, or the like), a polycyclic pigment (for example, a quinacridone pigment, a perylene pigment, a perinone pigment, an anthraquinone pigment, a dioxazine pigment, a thioindigo pigment, an isoindolinone pigment, an isoindolin pigment, a quinophthalone pigment, a diketopyrrolopyrrole pigment, or the like), a phthalocyanine pigment, a dye chelate (for example, a basic dye-type chelate, an acidic dye-type chelate, or the like), a nitro pigment, a nitroso pigment, and an organic pigment such as aniline black. As the pigment, it is possible to use the above-described pigments singly or two or more pigments in combination.

As the pigment, in the case of carbon black, it is possible to use #2300, #980, #960, #900, #52, #45L, #45, #40, #33, MA100, MA8, MA7, and the like manufactured by Mitsubishi Chemical Corporation, Regal series, Monarch series, and the like manufactured by Cabot Corporation, and Color Black FW1, Color Black series, Printex series, Special Black series, NIPEX series, and the like manufactured by Orion Engineered Carbons.

As the pigment, it is possible to use yellow pigments such as C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, 185, and the like.

As the pigment, it is possible to use magenta pigments such as C.I. Pigment Red 5, 7, 12, 48 (Ca), 48 (Mn), 57 (Ca), 57: 1, 112, 122, 123, 146, 149, 150, 168, 176, 184, 185, 202, 209, 213, 269, 282, and the like.

As the pigment, it is possible to use cyan pigments such as C.I. Pigment Blue 1, 2, 3, 15, 15:1, 15:2, 15:3, 15:4, 15:6, 16, 22, 60, 63, 66, and the like.

As the pigment, it is possible to use orange pigments such as C.I. Pigment Orange 5, 13, 16, 17, 34, 36, 43, 51, 64, 71, and the like.

As the pigment, it is possible to use violet pigments such as C.I. Pigment Violet 1, 3, 5:1, 16, 19, 23, 38, and the like.

As the pigment, it is possible to use green pigments such as C.I. Pigment Green 1, 4, 7, 8, 10, 17, 18, 36, 50, 58, and the like.

As the pigment, it is possible to use a pigment in a dry powder state or a pigment in a wet cake state. As the pigment, it is possible to use a mixture or solid solution containing two or more pigments.

As the pigment, a pigment having a primary particle diameter of 1.0 $\mu$m or less is preferably used, and a pigment having a primary particle diameter of 0.01 $\mu$m to 0.5 $\mu$m is more preferably used. With the use of a pigment having a primary particle diameter in the above-described range, it is possible to more effectively suppress the sedimentation of the pigment over time. The primary particle diameter refers to a value of the number average particle diameter measured using a transmission electron microscope (TEM).

The amount of the pigment used is preferably 30% by mass to 80% by mass with respect to the total amount of the content (a1) and particularly preferably 35% by mass to 75% by mass since the viscosity of the content (a1) is maintained appropriately high while the content (a1) is kneaded in a step [2] described below, and shear that is applied from a kneading apparatus to the content (a1) is increased, whereby it is possible to cause the pulverization of an agglomerate of the pigment and the adsorption of the resin to the pigment to efficiently proceed in parallel, and consequently, a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

As the resin that is contained in the content (a1), it is possible to use, for example, a pigment-dispersed resin, a binder resin, or the like. As the pigment-dispersed resin, it is possible to use a conventionally known resin. For example, it is possible to use a radical polymer, and a radical polymer having an aromatic cyclic structure or a heterocyclic structure is particularly preferably used since a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

In the case of using a radical polymer having anionic groups as the resin such as the pigment-dispersed resin, a radical polymer in which part or all of the anionic groups are neutralized by a basic compound (neutralized substance) is particularly preferably used since a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

As the aromatic cyclic structure or the heterocyclic structure, a cyclic structure introduced to the radical polymer by using a monomer having an aromatic cyclic structure or a monomer having a heterocyclic structure described below is exemplified.

As the aromatic cyclic structure, a benzene ring structure is preferably used, and a styrene-derived structure is more preferred.

With the use of a pigment-dispersed resin that is the radical polymer having an aromatic cyclic structure or a heterocyclic structure, it is possible to enhance the adsorptive property of the pigment-dispersed resin to the pigment, and, as a result, it becomes possible to efficiently obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

In addition, the acidic value of the resin used such as the pigment-dispersed resin is preferably 60 to 300 mgKOH/g, more preferably 80 to 250 mgKOH/g, and particularly preferably 100 to 200 mgKOH/g since it is possible to improve the adsorptive property of the resin such as the pigment-dispersed resin to the pigment, and as a result, it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time. Specifically, in the case of using a water-soluble organic solvent and a basic compound, which will be described below, in combination in the step [2], the pigment-dispersed resin having an acid value in the above-described range is likely to fully or partially dissolve in the water-soluble organic solvent or to swell due to the water-soluble organic solvent and is consequently likely to form a salt (neutralized substance) with a basic compound described below. Therefore, the hydrophilicity of the pigment to which the resin such as the pigment-dispersed resin is adsorbed significantly improves, and, as a result, it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

The acid value is preferably an acid value derived from an anionic group such as a carboxy group, a sulfo group, or a phosphate group. In addition, the acid value is a numerical value measured according to Japanese Industrial Standards "K0070:1992, Test methods for acid value, saponification value, ester value, iodine value, hydroxyl value and unsaponifiable matter of chemical products" except that tetrahydrofuran is used as a solvent instead of diethyl ether and refers to the amount (mg) of potassium hydroxide necessary to fully neutralize 1 g of the resin.

As the radical polymer that can be used as the pigment-dispersed resin, it is possible to use, for example, a polymer obtained by the radical polymerization of a variety of monomers.

As the monomer, a monomer having an aromatic cyclic structure can be used in the case of introducing an aromatic cyclic structure to the pigment-dispersed resin, and a monomer having a heterocyclic structure can be used in the case of introducing a heterocyclic structure.

As the monomer having an aromatic cyclic structure, it is possible to use, for example, styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, $\alpha$-methylstyrene, p-methyl-$\alpha$-methylstyrene, vinylnaphthalene, vinyl anthracene, or the like.

As the monomer having a heterocyclic structure, it is possible to use, for example, a vinylpyridine-based monomer such as 2-vinylpyridine or 4-vinylpyridine.

In the case of using a radical polymer having both an aromatic cyclic structure and a heterocyclic structure as the radical polymer, as the monomer, it is possible to use a monomer having an aromatic cyclic structure and a monomer having a heterocyclic structure in combination.

In the present invention, since a radical polymer having an aromatic cyclic structure is preferably used as the pigment-dispersed resin, as the monomer, a monomer having an aromatic cyclic structure is preferably used, and styrene, $\alpha$-methylstyrene, or tert-butylstyrene is more preferably used.

The amount of the monomer having an aromatic cyclic structure or a heterocyclic structure used is preferably 20% by mass or more, more preferably 40% by mass or more, and still more preferably 50% by mass or more and 95% by mass or less with respect to the total amount of the monomer since it is possible to further enhance the adsorptive property of the pigment-dispersed resin to the pigment.

In addition, as the pigment-dispersed resin, it is possible to use a monomer having an anionic group as the monomer since a radical polymer having an acid value in the above-described range is produced.

As the monomer having an anionic group, it is possible to use, for example, a monomer having an anionic group such as a carboxy group, a sulfo group, or a phosphate group.

As the monomer having an anionic group, a monomer having a carboxy group that is easily procured is preferably used since a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained. Acrylic acid or methacrylic acid is more preferably used.

The amount of the monomer having an anionic group used is preferably 5% by mass to 80% by mass, more preferably 5% by mass to 60% by mass, and still more preferably 5% by mass to 50% by mass with respect to the total amount of the monomer that can be used for the production of the pigment-dispersed resin since a radical polymer having an acid value in the predetermined range is obtained.

In addition, as the monomer that can be used for the production of the pigment-dispersed resin, it is possible to use, in addition to the above-described monomers, a different monomer as necessary.

As the different monomer, it is possible to use, for example, methyl (meth)acrylate, n-propyl (meth)acrylate, isopropyl (meth)acrylate, n-butyl (meth)acrylate, sec-butyl (meth)acrylate, tert-butyl (meta)acrylate, 2-ethylbutyl (meth)acrylate, 1,3-dimethylbutyl (meth)acrylate, hexyl (meth)acrylate, 2-ethylhexyl (meth)acrylate, octyl (meth)acrylate, ethyl (meth)acrylate, n-butyl (meth)acrylate, 2-methylbutyl (meth)acrylate, pentyl (meth)acrylate, heptyl (meth)acrylate, nonyl (meth)acrylate, 3-ethoxypropyl (meth)acrylate, 3-ethoxybutyl (meth)acrylate, dimethylaminoethyl (meth)acrylate, 2-hydroxyethyl (meth)acrylate, 2-hydroxybutyl (meth)acrylate, ethyl-$\alpha$-(hydroxymethyl) (meth)acrylate, dimethylaminoethyl (meth)acrylate, hydroxyethyl (meta)acrylate, hydroxypropyl (meth)acrylate, phenyl (meth)acrylate, benzyl (meth)acrylate, phenylethyl (meth)acrylate, diethylene glycol (meth)acrylate, triethylene glycol (meth)acrylate, polyethylene glycol (meth)acrylate, glycerin (meth)acrylate, bisphenol A (meth)acrylate, dimethyl maleate, diethyl maleate, vinyl acetate, and the like singly or in combination. It should be noted that the "(meth) acrylate" refers to acrylate or methacrylate. As the different monomer, such acrylate or methacrylate may be used singly or acrylate and methacrylate may be used in combination.

In addition, as the pigment-dispersed resin, it is possible to use a polymer in which a structure formed by the radical polymerization of the monomer is linear, a polymer having a branched (graft) structure, or a polymer having a crosslinked structure. In each of the polymers, the monomer sequence is not particularly limited, and it is possible to use a polymer having a random-type or block-type sequence.

The polymer having a crosslinked structure can be produced using a monomer having a crosslinkable functional group as the monomer.

As the monomer having a crosslinkable functional group, it is possible to use, for example, ethylene glycol di(meth)acrylate, propylene glycol di(meth)acrylate, polyethylene glycol di(meth)acrylate, poly(oxyethylene oxypropylene) glycol di(meth)acrylate, poly(meth)acrylate of a polyhydric alcohol such as tri(meth) acrylate of an alkylene oxide adduct of glycerin; glycidyl (meth)acrylate, divinylbenzene, or the like.

As the pigment-dispersed resin that is used in the present invention, it is possible to use a polymer of the above-described monomers, but a polymer obtained by polymerizing only the monomer having an anionic group and the monomer having an aromatic cyclic structure or a heterocyclic structure is preferably used.

As the pigment-dispersed resin, among the above-described resins, polymers having a styrene structural unit and a (meth) acrylic acid structural unit such as a styrene- (meth) acrylate copolymer and a styrene- (meth) acrylic acid ester-(meth)acrylate polymer are preferably used, and, among them, a polymer having an acid value in the preferable range is particularly preferably used since a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

As the styrene- (meth) acrylate copolymer, it is possible to use any of a styrene-acrylate copolymer, a styrene-methacrylate copolymer, and a styrene-acrylate-methacrylate copolymer, but the styrene-acrylate-methacrylate copolymer is preferably used since the copolymerization property of the monomers improves, and consequently, a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

In the styrene- (meth) acrylate copolymer used, the total amount of styrene, acrylic acid, and methacrylic acid is preferably 80% by mass to 100% by mass and more preferably 90% by mass to 100% by mass with respect to the total amount of the monomers that are used for the production of the styrene-(meth)acrylate copolymer.

In the present invention, the radical polymerization rates (reaction rates) of individual monomers during the radical polymerization are set to be almost the same, and the proportions of the individual monomers used (the proportions of the individual monomers prepared) are regarded to be the same as the proportions of structural units derived from the individual monomers that form the radical polymer.

The radical polymer can be produced by, for example, the radical polymerization of the above-described monomers by a method such as the bulk polymerization method, the solution polymerization method, the suspension polymerization method, or the emulsion polymerization method.

During the production of the radical polymer, it is possible to use a polymerization initiator, a chain transfer (polymerization degree adjuster), a surfactant, and a defoamer, which are well-known and common, as necessary.

Examples of the polymerization initiator include 2,2'-azobis(2,4-dimethylvaleronitrile), 2,2'-azobisisobutyronitrile, 1,1'-azobis(cyclohexane-1-carbonitrile), benzoyl peroxide, dibutyl peroxide, butyl peroxybenzoate, and the like. The amount of the polymerization initiator used is preferably 0.1% by mass to 10% by mass with respect to the total amount of the monomers that are used for the production of the radical polymer.

In the case of using a radical polymer obtained by the solution polymerization method as the pigment-dispersed resin, as the pigment-dispersed resin, it is possible to use a radical polymer produced by removing a solvent in a radical polymer solution obtained by the solution polymerization method, then, drying the solvent, and pulverizing the solvent into fine particles.

The pigment-dispersed resin that is the radical polymer pulverized into fine particles is likely to fully or partially dissolve in a water-soluble organic solvent described below or to swell due to the water-soluble organic solvent in the case of using the water-soluble organic solvent and a basic compound, which will be described below, in combination in the step [2]. Therefore, it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

As the pigment-dispersed resin, a pigment-dispersed resin classified with a mesh sieve having openings as large as 1 mm or smaller (in diameter) is preferably used.

The weight-average molecular weight of the resin used such as the pigment-dispersed resin is preferably 2,000 to 40,000, more preferably 5,000 to 30,000, and preferably 5,000 to 25,000 since a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

It should be noted that the weight-average molecular weight is a value that is measured by the gel permeation chromatography (GPC) method and is a value converted to the molecular weight of polystyrene, which is used as a standard substance.

In the content (a1) used, the mass ratio of the resin such as the pigment-dispersed resin to the pigment is preferably 5% by mass to 200% by mass and more preferably 10% by mass to 100% by mass. In such a case, it becomes possible to knead the content (a1) in an appropriate viscosity in the step [2]. In addition, it becomes easy for the resin such as the pigment-dispersed resin to be adsorbed to the pigment, whereby it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

In addition, as the resin, it is possible to use, in addition to the pigment-dispersed resin, a binder as necessary. As the binder, it is possible to use an acrylic resin, a polyurethane-based resin, or the like, which are described above.

In addition, as the content (a1), it is possible to use a content containing, in addition to the pigment and the resin such as the pigment-dispersed resin, a basic compound as necessary.

In a case where the pigment-dispersed resin has an anionic group, the basic compound neutralizes the anionic group. When the pigment-dispersed resin is neutralized with the basic compound, in the step [3], the affinity of the pigment to which the pigment-dispersed resin is adsorbed to an aqueous medium increases. As a result, the volume-average particle diameter of a dispersed substance is extremely small, the number of coarse particles is small, the dispersion state of pigment particles in the aqueous pigment dispersion becomes more stable, the generation of coarse particles over time can be more effectively prevented, and it is possible to more effectively prevent the occurrence of the sedimentation of the pigment or the like over time.

As the basic compound, it is possible to use, for example, an inorganic basic compound or an organic basic compound.

As the basic compound, it is possible to use a well-known basic compound, and examples thereof include hydroxides of alkali metals such as potassium and sodium, carbonates of alkali metals such as potassium and sodium, hydroxides of alkali earth metals such as calcium and barium, inorganic basic compounds such as carbonates of calcium, barium, or the like, amino alcohols such as triethanolamine, N,N-dimethanolamine, N-ethylethanolamine, dimethylethanolamine, and N-butyldiethanolamine, morpholins such as morpholin, N-methylmorpholin, and N-ethylmorpholin, piperazine such as N-(2-hydroxyethyl) piperazine and piperazine hexahydrate, and organic basic compounds such as ammonium hydroxide. Among them, as the basic compound, an alkali metal hydroxide represented by potassium hydroxide, sodium hydroxide, and lithium hydroxide is preferably used since the neutralization efficiency of the resin such as the pigment-dispersed resin is excellent, and thus the dispersion stability of the pigment to which the pigment-dispersed resin is adsorbed with respect to the aqueous medium improves. Potassium hydroxide is particularly preferable.

In the case of using a resin having an anionic group as the pigment-dispersed resin, the basic compound is preferably used in a range in which the neutralization rate of the pigment-dispersed resin reaches a range of 80% to 120% since the affinity of the neutralized pigment-dispersed resin to the aqueous medium is enhanced, and as a result, the dispersion stability of the pigment to which the pigment-dispersed resin is adsorbed in the aqueous medium improves.

Neutralization rate (%) = ((mass (g) of basic compound x 56 x 1,000)/(acid value of pigment-dispersed resin x equivalent of basic compound x mass (g) of pigment-dispersed resin)) x 100

In addition, as the content (a1), it is possible to use a content containing, in addition to the pigment or the resin such as the pigment-dispersed resin, a pigment derivative as necessary.

The pigment derivative is capable of imparting the aqueous pigment dispersion and ink obtained using the aqueous pigment dispersion with dispersion stability enabling the prevention of the generation of coarse particles over time and the prevention of the occurrence of the sedimentation of the pigment or the like over time.

As the pigment derivative, it is possible to use a pigment derivative obtained by introducing a specific functional group, which will be described below, to the pigment. Examples of the pigment include phthalocyanine-based pigments, azo-based pigments, anthraquinone-based pigments, quinacridone-based pigments, diketopyrrolopyrrole-based pigments, and the like. Examples of the functional group include a carboxy group, a sulfo group, an amino group, a nitro group, an acid amide group, a carbonyl group, a carbamoyl group, a phthalimide group, a sulfonyl group, and the like.

In addition, as the content (a1), it is possible to use a content containing, in addition to the above-described components, a solvent such as a water-soluble organic solvent or water as necessary.

The water-soluble organic solvent is likely to fully or partially dissolve the resin such as the pigment-dispersed resin or to cause the resin such as the pigment-dispersed resin to swell in the step [2], which consequently facilitates the adsorption of the resin such as the pigment-dispersed resin to the pigment. Therefore, it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

Examples of the water-soluble organic solvent include a variety of other solvents known as water-soluble organic solvents such as glycols such as ethylene glycol, diethylene glycol, triethylene glycol, tetraethylene glycol, propylene glycol, dipropylene glycol, tripropylene glycol, polyethylene glycol, and polypropylene glycol; diols such as butanediol, pentanediol, and hexanediol; glycol esters such as propylene glycol laurate; diethylene glycol ethers such as diethylene glycol monoethyl, diethylene glycol monobutyl, diethylene glycol monohexyl, and carbitol; glycol ethers such as cellosolves containing propylene glycol ether, dipropylene glycol ether, and triethylene glycol ether; alcohols such as methanol, ethanol, isopropyl alcohol, 1-propanol, 2-propanol, 1-butanol, 2-butanol, butyl alcohol, and pentyl alcohol; lactones such as sulfolanes, esters, ketones, and γ-butyrolactone, lactams such as N-(2-hydroxyethyl) pyrrolidone and 2-pyrrolidinone, and glycerin and polyalkylene oxide adducts thereof. As the water-soluble organic solvent, it is possible to use the above-described water-soluble organic solvents singly or in combination.

Among them, as the water-soluble organic solvent, it is preferable to use poorly volatile polyhydric alcohols that have a high boiling point and function as a wetting agent and derivatives of glycerin, and particularly, glycols such as diethylene glycol and triethylene glycol and polyalkylene oxide adducts of glycerin such as polyethylene oxide adducts of glycerin are preferably used.

The amount of the water-soluble organic solvent used in the step [1] is preferably 10% by mass to 200% by mass and particularly preferably 15% by mass to 150% by mass with respect to the mass of the pigment since a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time is obtained.

As the water that can be used in the step [1], it is possible to use pure water such as ion-exchanged water, ultrafiltration water, reverse osmosis water, or distilled water or ultrapure water. In addition, as the water, water sterilized by ultraviolet irradiation, the addition of hydrogen peroxide, or the like is preferably used since it is possible to prevent the generation of mold or bacteria in the case of preserving the aqueous pigment dispersion, ink for which the aqueous pigment dispersion is used, or the like for a long period of time.

In the step [1], it is possible to supply, for example, the resin, the pigment, as necessary, the water-soluble solvent or water, the basic compound, and the like to the container provided in the kneading apparatus in random order. Examples of the method for supplying the resin and the like to the container include a method in which the components are supplied in batch to the container, a method in which the components are separately supplied to the container, and the like.

Next, the step [2] that configures the present invention will be described.

The step [2] is a step of continuously kneading the content (a1) present in the container of the kneading apparatus after the step [1] with the kneading apparatus until the storage elastic modulus of the content (a1) at an angular frequency of 1 rad/s, which is obtained by the measurement of dynamic viscoelasticity at a temperature of 25°C, reaches a range of 200 kPa to 30,000 kPa. With the step [2], it is possible to obtain a pigment-kneaded product that can be used for the production of an aqueous pigment dispersion having an extremely small volume-average particle diameter of a dispersed substance and being excellent in terms of preservation stability which can prevent the occurrence of the sedimentation of coarse particles, a pigment, or the like over time, that is capable of preventing the occurrence of the sedimentation of coarse particles, a pigment, or the like over time in ink, and that can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

Here, in the case of completing kneading regardless of the fact that the storage elastic modulus is not in the above-described range, it is not possible to impart a sufficient shear force to the content (a1), and consequently, there is a case where it is not possible to obtain a pigment-kneaded product that has an extremely small volume-average particle diameter of a dispersed substance, contains a small number of coarse particles, and can be used for the production of ink having dispersion stability and discharge stability that are excellent enough to satisfy both the suppression of the generation of coarse particles over time and the prevention of the occurrence of the sedimentation of the pigment or the like over time.

At a point in time where the content (a1) reaches the storage elastic modulus in the above-described range, the kneading may be immediately completed or may be continued for a certain period of time in a state where the storage elastic modulus in the above-described range is maintained. The point in time where the kneading is completed can be appropriately adjusted depending on the kind of the pigment being used, and the kneading is preferably completed at a point in time where the content (a1) reaches the storage elastic modulus in the above-described range.

Usually, the kneading is preferably completed within five hours from the point in time where the content (a1) reaches the storage elastic modulus in the above-described range. The storage elastic modulus of the content (a1) can be found by collecting the content (a1) in the middle of kneading in the step [2] and measuring the storage elastic modulus by a predetermined method.

The kneading in the step [2] is particularly preferably continued until the storage elastic modulus of the content (a1) at an angular frequency of 1 rad/s, which is obtained by the measurement of dynamic viscoelasticity at a temperature of 25°C, reaches a range of 200 kPa to 30,000 kPa since a pigment-kneaded product that can be used for the production of an aqueous pigment dispersion having an extremely small volume-average particle diameter of a dispersed substance and containing a small number of coarse particles, that contains a small number of coarse particles, and that can be used for the production of ink having dispersion stability and ink discharge stability that are excellent enough to satisfy both the suppression of the generation of coarse particles over time and the prevention of the occurrence of the sedimentation of the pigment or the like over time is obtained.

It should be noted that the storage elastic modulus refers to a storage elastic modulus at an angular frequency of 1 rad/s in a plot between the angular frequency along the horizontal axis and the storage elastic modulus along the vertical axis that is obtained by the measurement of dynamic viscoelasticity at a temperature of 25°C according to "JIS K 7244-10: 2005 Complex Shear Viscosity Using A Parallel-plate Oscillatory Rheometer".

In the step [2], as the kneading apparatus that is used for the kneading of the content (a1), it is possible to use, for example, a Henschel mixer, a pressurization kneader, a Banbury mixer, a trimix, a planetary mixer, or the like.

As the kneading apparatus, for example, in a case where a solvent such as the water-soluble organic solvent or water is used in the step [1], preferably used is a kneading apparatus in which the inside of the container provided in the kneading apparatus can be closed. The expression "the inside of the container can be closed" refers to the fact that, for example, a space formed by the container provided in the kneading apparatus and the container lid can be closed, and such a closing type kneading apparatus is preferably used since a significant change in the content of the solvent such as the water-soluble organic solvent or water in the step [2] is prevented.

It should be noted that the expression "significant change" refers to a state where the proportion of the mass of the pigment-kneaded product obtained after the completion of the step [2] in the mass of the content (a1) is less than 90% by mass.

As the kneading apparatus, it is possible to use, for example, a kneading apparatus including the container, which is a stirring vessel, and a monoaxial or multiaxial stirring blade, and a closing type kneading apparatus further including a lid portion of the container is preferably used.

As the closing type kneading apparatus, a kneading apparatus having two or more stirring blades is preferably used since a strong kneading action is obtained.

As the closing type kneading apparatus, particularly, a planetary mixer is preferably used since it is possible to impart a strong shear force in a case where a component having a non-volatile content of 50% by mass or more is preferably used as the content (a1), and it is possible to further facilitate the pulverization of an agglomerate of the pigment and the adsorption of the resin such as the pigment-dispersed resin to the pigment.

In addition, the planetary mixer is preferable since, even when the content (a1) has a broad range of viscosity, it is possible to further facilitate the pulverization of an agglomerate of the pigment and the adsorption of the resin such as the pigment-dispersed resin to the pigment.

In addition, the planetary mixer is preferably used since it is possible to produce an aqueous pigment dispersion by, after the completion of the step [2], subsequently supplying an aqueous medium described below to the inside of the container of the planetary mixer, and thus the production efficiency of the aqueous pigment dispersion or ink improves.

The temperature of the content (a1) during the kneading of the content (a1) in the step [2] is preferably appropriately adjusted in consideration of the temperature characteristics, such as the glass transition temperature, of the pigment-dispersed resin. Specifically, the upper limit of the temperature of the content (a1) during the kneading is preferably the glass transition temperature (Tg) of the pigment-dispersed resin. On the other hand, the lower limit of the temperature of the content (a1) during the kneading is preferably a temperature lower than the glass transition temperature (Tg) of the pigment-dispersed resin by 60°C. The content (a1) is preferably kneaded in the above-described temperature range since it becomes possible to impart a sufficient shear force to the composition (a1), and as a result, it is possible to further facilitate the pulverization of an agglomerate of the pigment and the adsorption of the resin such as the pigment-dispersed resin to the pigment.

In addition, there is a case where the temperature of the content (a1) have different influences on the pigment-kneaded product or the like depending on the kind of the pigment. For example, in the case of using C.I. Pigment Yellow 74, which is an yellow pigment, when the temperature exceeds 80°C, there is a tendency that the volume-average particle diameter of a dispersed substance slightly increases immediately after the production of an aqueous pigment dispersion to be obtained, and thus it is preferable to adjust the temperature by supplying a solvent such as water or a water-soluble organic solvent as described below. In the case of using C.I. Pigment Black 7, which is a black pigment, when the temperature exceeds 120°C, there is a tendency that the viscosity of the content (a1) decreases, and there is a case where a shear force that is applied to the content (a1) weakens, and thus it is preferable to adjust the temperature by supplying a solvent such as water or a water-soluble organic solvent as described below.

The temperature of the content (a1) during the kneading of the content (a1) is more preferably maintained at, specifically, 60°C to 120°C since the content (a1) imparts a more sufficient shear force, and as a result, it is possible to further facilitate the pulverization of an agglomerate of the pigment and the adsorption of the resin such as the pigment-dispersed resin to the pigment.

In addition, during the kneading, there is a case where an increase in the temperature of the content (a1) causes a significant decrease in viscosity. When the viscosity of the content (a1) decreases, there is a case where it is not possible to apply a sufficient shear force to the content (a1), and thus, during the kneading, the content (a1) may be intentionally cooled by adding an aqueous medium or the like described below in the middle of the kneading.

A solvent such as water or the water-soluble organic solvent may be supplied to the content (a1) or the kneading apparatus or the content (a1) may be cooled using dry ice, liquid nitrogen, or the like as necessary so as to prevent the temperature of the content (a1) from deviating from the above-described range in the middle of the step [2].

It should be noted that the glass transition temperature (Tg) of the pigment-dispersed resin refers to a value calculated using the FOX formula based on the glass transition temperature of a homopolymer of each monomer used for the production of the pigment-dispersed resin.

$$1/Tg = W1/Tg1 + W2/Tg2 + W3/Tg3 \ldots + Wn/Tgn$$

(In the formula, Tgn represents the glass transition temperature (absolute temperature: K) of the homopolymer of each monomer used for the production of the pigment-dispersed resin, and Wn represents the mass fraction of the monomer).

The pigment-kneaded product obtained by the production method of the present invention described above is a pigment-kneaded product in a semi-solid or solid state under normal temperature conditions in which an agglomerate of the pigment is crushed and the pigment-dispersed resin is adsorbed to the atomized pigment. Therefore, the pigment-kneaded product can be easily dispersed in an aqueous medium described below.

Next, a step [3] of mixing the pigment-kneaded product obtained by the above-described method with an aqueous medium will be described.

The step [3] is a step of mixing the pigment-kneaded product obtained through the steps [1] and [2], the aqueous medium, and, as necessary, other components. With the step [3], it is possible to obtain an aqueous pigment dispersion in which the pigment-kneaded product or the like dissolves or disperses in the aqueous medium.

In the step [3], the aqueous medium or the like may be supplied to and mixed with the pigment-kneaded product, or the pigment-kneaded product may be supplied to and mixed with the aqueous medium or the like.

In the case of using the closing type kneading apparatus such as a planetary mixer in the step [2], it is preferable to supply the aqueous medium or the like to the container of the kneading apparatus including the pigment-kneaded product and mix the aqueous medium or the like and the pigment-kneaded product since the production efficiency of the aqueous pigment dispersion improves. In this case, in a state where the kneading apparatus is in operation (that is, a state where the kneading of the step [2] continues even after the storage elastic modulus of the content (a1) reaches a range of 200 kPa to 30,000 kPa), it is preferable to supply the aqueous medium in the step [3] since the dispersion efficiency of the pigment-kneaded product in the aqueous medium and the production efficiency of the aqueous pigment dispersion are improved. As the aqueous medium, it is preferable to use water (25°C to 65°C) since a significant decrease in the temperature of the pigment-kneaded product is suppressed.

In addition, examples of the method for supplying the aqueous medium to the pigment-kneaded product include a method in which the aqueous medium is supplied in batch, a method in which the aqueous medium is continuously or intermittently supplied, and the like. As the method for supplying the aqueous medium, it is preferable to employ the method in which the aqueous medium is continuously or intermittently supplied since it is possible to efficiently disperse the pigment-kneaded product in the aqueous medium and to shorten the time necessary for the production of the aqueous pigment dispersion.

As the aqueous medium that can be used in the step [3], it is possible to use, for example, water, a water-soluble organic solvent that easily mixes with water, or a mixture of water and a water-soluble organic solvent. As the water-soluble organic solvent, it is possible to use the same water-soluble organic solvents as those exemplified as the water-soluble organic solvent that can be used in the step [2] singly or in combination.

The aqueous pigment dispersion obtained through the steps [1], [2], and [3] is a liquid-form dispersion in which the pigment to which the resin such as the pigment-dispersed resin is adsorbed disperses in the aqueous medium, whereby the aqueous pigment dispersion has an extremely small volume-average particle diameter of a dispersed substance, contains a small number of coarse particles, is capable of preventing the generation of coarse particles over time, and has dispersion stability which can prevent the occurrence of the sedimentation of the pigment or the like over time.

The non-volatile content of the aqueous pigment dispersion is preferably 10% by mass to 30% by mass and more preferably 12% by mass to 25% by mass with respect to the total amount of the aqueous pigment dispersion.

In the present invention, for the purpose of further suppressing the generation of coarse particles over time or the occurrence of the sedimentation of the pigment or the like over time in the aqueous pigment dispersion, a dispersion treatment may be performed using a dispersion apparatus as necessary on the aqueous pigment dispersion obtained in the step [3] before a centrifugal separation treatment in a step [4] described below. As the dispersion apparatus using a medium, it is possible to use, for example, a paint shaker, a ball mill, an attritor, a basket mill, a sand mill, a sand grinder, a dyno mill, a dispermat, an SC mill, a spike mill, an agitator mill, or the like, and, as a medium-free dispersion apparatus, it is possible to use an ultrasonic homogenizer, a nanomizer, a dissolver, a disper, a high-speed impeller disperser, a high-pressure homogenizer, or the like.

In addition, in a case where the aqueous pigment dispersion contains an impurity such as a polyhydric metal ion, in the present invention, a treatment for removing the impurity is preferably performed on the aqueous pigment dispersion obtained in the step [3] using a chelate resin or the like as necessary before the centrifugal separation treatment in the step [4] described below.

As an inkjet printing method, a piezo method and a thermal method are known. Particularly, in the thermal method, there is a case where a phenomenon called kogation in which, due to an abrupt increase in temperature in a nozzle during the discharge of ink, an agglomerate of the resin such as the pigment-dispersed resin and the polyhydric metal ion or an agglomerate of a polyhydric metal salt derived from the polyhydric metal ion is deposited on the surface of a heat generation resistance element in the nozzle occurs. The agglomerate acts as a cause for the poor discharge of ink, and thus there is a strong demand for the reduction of a polyhydric metal ion in ink for inkjet printing.

Examples of the method for reducing the polyhydric metal ion include a method in which a particle or fibrous resin having a chelate-forming group is brought into contact with aqueous pigment ink or an aqueous pigment dispersion to remove polyhydric metal and the like.

In the present invention, a centrifugal separation treatment (step [4]) is preferably further performed on the aqueous pigment dispersion obtained through at least the step [1], the step [2] and the step [3], at 30°C to 70°C.

The aqueous pigment dispersion obtained with the step [3] (that is, an aqueous pigment dispersion that has not undergone the step [4]) substantially does not contain coarse particles that impair the discharge stability in the initial stage, but there is a case where an extremely small amount of a component that may form the coarse particles of a non-pulverized substance of the pigment, a non-dissolved substance of the resin such as the pigment-dispersed resin, a pigment to which the pigment-dispersed resin is not sufficiently adsorbed, or the like over time remains.

There is a case where these components agglomerate over time, thereby forming coarse particles and causing the clogging of an ink discharge nozzle.

In the present invention, the step [4] in which the centrifugal separation treatment is performed under a predetermined condition is performed after the production of the aqueous pigment dispersion in the step [3], thereby efficiently and appropriately separating a component that may form coarse particles over time. As a result, it is possible to produce an aqueous pigment dispersion having excellent temporal discharge stability that can be used for the production of ink that prevents the clogging or the like of highly-densified miniaturized ink discharge nozzles or ink.

It should be noted that the coarse particles mentioned in the present invention refer to particles having a particle diameter (the diameter of the particle) of 0.5 μm or more that is measured using a particle size distribution analyzer by a number counting method (Accusizer 780 APS) manufactured by Particle Sizing Systems Inc.

In the step [4], it is not enough to simply perform the centrifugal separation treatment, and the centrifugal separation treatment is preferably performed at 30°C to 70°C and more preferably performed at 40°C to 65°C since the coarse particles are efficiently and practically sufficiently removed. It should be noted that the temperature refers to the temperature of the aqueous pigment dispersion that is centrifugally separated in the step [4].

Before the aqueous pigment dispersion that is to be subjected to the centrifugal separation treatment is supplied to a centrifugal separation apparatus, the temperature of the aqueous pigment dispersion may be adjusted to 30°C to 70°C in advance using, for example, a heat-exchanging apparatus, and, in the case of using a centrifugal separation apparatus having a temperature-setting function, the temperature may be adjusted to the above-described temperature range after the aqueous pigment dispersion is supplied to the centrifugal separation apparatus separation apparatus.

Since the heated aqueous pigment dispersion has a low viscosity, the centrifugal separation efficiency improves, and it is possible to efficiently remove coarse particles. In addition, when the aqueous pigment dispersion is controlled in the above-described temperature range, the aqueous pigment dispersion is not easily affected by the temperature of an external air, and it is possible to stably produce an aqueous pigment dispersion having a small number of coarse particles.

As the aqueous pigment dispersion that is to be subjected to the centrifugal separation treatment, an aqueous pigment dispersion having a viscosity of 13 mPa·s or less at 25°C is preferably used since it is possible to more efficiently and practically sufficiently remove coarse particles from the aqueous pigment dispersion.

Particularly, in the case of using a cylindrical centrifugal separation apparatus described below as the centrifugal separation apparatus, the viscosity at 25°C of the aqueous pigment dispersion that is to be subjected to the centrifugal separation treatment is preferably 10.5 mPa·s or less and more preferably 2 mPa·s to 10.5 mPa·s since it is possible to more efficiently and practically sufficiently remove coarse particles from the aqueous pigment dispersion.

As the centrifugal separation apparatus, a centrifugal separation apparatus having a cylindrical rotor is preferably used since it is possible to effectively suppress a decrease in the centrifugal separation efficiency attributed to the deposition of clay-form sludge containing the coarse particles in the rotor.

As described above, the aqueous pigment dispersion obtained through the step [1], the step [2], and the step [3] (that is, an aqueous pigment dispersion that has not undergone the step [4]) is likely to contain coarse particles having a variety of sizes such as coarse particles of the pigment, a non-pulverized substance of the pigment, and a non-dissolved substance of the resin such as the pigment-dispersed resin. When the step [4] is performed using the cylindrical centrifugal separation apparatus, it is possible to efficiently and continuously remove the coarse particles without impairing productivity, and consequently, it is possible to obtain dispersion stability that is excellent enough to satisfy both the suppression of the generation of coarse particles over time and the prevention of the occurrence of the sedimentation of the pigment or the like over time.

In addition, the step [4] is preferably a step which is performed in a state where the aqueous pigment dispersion obtained in the step [3] is supplied to the rotor provided in the cylindrical centrifugal separator while the temperature of the aqueous pigment dispersion is maintained at 30°C to 70°C since it is possible to stably maintain a preferable centrifugal separation efficiency for a long period of time and to more efficiently and sufficiently remove coarse particles from the aqueous pigment dispersion obtained in the step [3]. At that time, the ratio of the supply amount (volume) of the aqueous pigment dispersion obtained in the step [3] with respect to the capacity of the rotor [the supply amount (volume) of the aqueous pigment dispersion obtained in the step [3]/the capacity of the rotor], multiplied by 100, is preferably 1, 000% to 8,000% since it is possible to suppress the removal of a component such as the pigment, which is not coarse particles, and to more efficiently remove coarse particles from the aqueous pigment dispersion obtained in the step [3].

The centrifugal acceleration of the centrifugal separation apparatus is preferably 8,000G to 20,000G since it is possible to prevent the pigment-dispersed resin from being peeled off from the pigment and to efficiently remove coarse particles from the aqueous pigment dispersion obtained in the step [3].

The centrifugal acceleration means a relative centrifugal acceleration and is defined by the following formula.

Relative centrifugal acceleration (G) = $r \times (2\pi N/60)^2/g$

(In the formula, N represents the number of revolutions per minute (rpm), r represents the radius of rotation (m), g represents the gravitational acceleration (9.8 m/s$^2$), and π represents the circumference ratio)

In addition, in the present invention, it is also possible to obtain an aqueous pigment dispersion that is capable of preventing the generation of coarse particles over time, has dispersion stability which can prevent the occurrence of the sedimentation of the pigment or the like over time, and can be used for the production of ink having excellent ink discharge stability with the present invention that produces an aqueous pigment dispersion by a method having a step [X] of producing a kneaded product by kneading a composition containing at least a pigment and a resin that have not undergone the step [1] to the step [3] and having a non-volatile content of 50% by mass or more, a step [Y] of producing a composition by mixing at least the kneaded product with an aqueous medium, and a step [Z] of centrifugally separating the composition obtained in the step [Y], at 30°C to 70°C. A raw material and a production condition that can be used in this invention are the same as those described in the step [4] or the like.

As described above, the aqueous pigment dispersion obtained with at least the step [1], the step [2], and the step [3], and furthermore, the aqueous pigment dispersion obtained through the step [4] has an extremely small volume-average particle diameter of a dispersed substance, particularly, is excellent in terms of preservation stability which can prevent the occurrence of the sedimentation of coarse particles, a pigment, or the like over time, is capable of preventing the occurrence of the sedimentation of coarse particles, a pigment, or the like over time in ink, and can be used for the production of ink having excellent initial discharge stability which prevents the clogging of ink discharge nozzles or the like in the initial stage of ink discharge and excellent temporal discharge stability which prevents the clogging of ink discharge nozzles or the like over time.

The aqueous pigment dispersion can be used as ink by being diluted to a desired concentration.

Examples of the ink include paint for automobiles and building materials, printing ink such as offset ink, gravure ink, flexographic ink, and silk screen ink, inks for inkjet printing, and the like.

In the case of using the ink as ink for inkjet printing, as the ink, preferably used is ink in which the concentration of the pigment is 1% by mass to 10% by mass with respect to the total amount of the ink.

The ink can be produced by mixing the aqueous pigment dispersion of the present invention, a solvent such as a water-soluble organic solvent or water as necessary, a binder such as the acrylic resin or the polyurethane-based resin described above, and an additive such as a drying inhibitor, a penetrant, a surfactant, a preservative, a viscosity adjuster, a pH adjuster, a chelating agent, a plasticizer, an antioxidant, or an ultraviolet absorber. The ink may be subjected to a centrifugal separation treatment or a filtration treatment after being produced by the above-described method.

The water-soluble organic solvent can be used since the drying of the ink is prevented and the viscosity or concentration of the ink is adjusted in a preferable range.

As the water-soluble organic solvent, it is possible to use the same water-soluble organic solvent as those exemplified as water-soluble organic solvents that can be used in the step [1] for the aqueous pigment dispersion. Particularly, examples thereof include lower alcohols such as ethanol and isopropyl alcohol; ethylene oxide adducts of alkyl alcohols such as ethylene glycol hexyl ether and diethylene glycol butyl ether; propylene oxide adducts of alkyl alcohols such as propylene glycol propyl ether, and the like since the permeability of the ink into recording media is enhanced.

Examples of the drying inhibitor include glycerin, ethylene glycol, diethylene glycol, triethylene glycol, triethylene glycol mono-n-butyl ether, polyethylene glycol having a molecular weight of 2,000 or less, propylene glycol, dipropylene glycol, tripropylene glycol, 1, 3-propylene glycol, isopropylene glycol, isobutylene glycol, 1,4-butanediol, 1,3-butanediol, 1,5-pentanediol, 1,6-hexanediol, mesoerythritol, pentaerythritol, and the like.

As the drying inhibitor, it is possible to use the same compound as the water-soluble organic solvent that is used in the aqueous pigment dispersion. Therefore, in the case of being already used in the aqueous pigment dispersion, the water-soluble organic solvent is also capable of serving as the drying inhibitor.

The penetrant can be used for the purpose of improving the permeability into recording media and adjusting dot diameters on recording media.

Examples of the penetrant include lower alcohols such as ethanol and isopropyl alcohol; and glycol monoethers of alkyl alcohols such as ethylene glycol hexyl ether, diethylene glycol butyl ether, and propylene glycol propyl ether.

The surfactant can be used to adjust ink characteristics such as surface tension. The surfactant is not particularly limited, examples thereof include a variety of anionic surfactants, nonionic surfactants, cationic surfactants, amphoteric surfactants, and the like, and, among them, anionic surfactants and nonionic surfactants are preferable.

Examples of the anionic surfactants include alkylbenzene sulfonate, alkylphenyl sulfonate, alkylnaphthalene sulfonate, higher fatty acid salt, sulfate ester salt of higher fatty acid ester, sulfonate of higher fatty acid ester, sulfate ester salt and sulfonate of higher alcohol ether, higher alkyl sulfosuccinate, polyoxyethylene alkyl ether carboxylate, polyoxyethylene alkyl ether sulfate, alkyl phosphate, polyoxyethylene alkyl ether phosphate, and the like, and specific examples thereof include dodecylbenzene sulfonate, isopropylnaphthalene sulfonate, monobutylphenylphenol monosulfonate, monobutylbiphenylsulfonate, dibutylphenylphenol disulfonate, and the like.

Examples of the nonionic surfactants include polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, sucrose fatty acid ester, polyoxyethylene alkylamine, polyoxyethylene fatty acid amide, fatty acid alkylolamide, alkylalkanolamide, acetylene glycol, oxyethylene adduct of acetylene glycol, polyethylene glycol polypropylene glycol block copolymer, and the like, and, among them, polyoxyethylene nonylphenyl ether, polyoxyethylene octylphenyl ether, polyoxyethylene dodecylphenyl ether, polyoxyethylene alkyl ether, polyoxyethylene fatty acid ester, sorbitan fatty acid ester, polyoxyethylene sorbitan fatty acid ester, fatty acid alkylolamide, acetylene glycol, oxyethylene adduct of acetylene glycol, polyethylene glycol polypropylene glycol block copolymer are preferable.

As other surfactants, it is possible to use silicone-based surfactants such as polysiloxane oxyethylene adduct; fluorine-based surfactants such as perfluoroalkyl carboxylate, perfluoroalkyl sulfonates, and oxyethylene perfluoroalkyl ether; biosurfactants such as spicullisporic acid, rhamnolipid, and lysolecithin, and the like.

In addition, the surfactants may be used singly or in combination.

Ink obtained by the above-described method can be preferably used as ink for inkjet printing. As an inkjet printing method, usually, selected is a single pass-mode inkjet printing method in which a line head is used, in which the degradation of the image quality is likely to be caused due to the clogging of ink discharge nozzles or the like compared with a multipass-mode (scan-mode) inkjet printing method, and a printing method and a method for producing a printed matter that is used in combination with the ink of the present invention are preferable since the degradation of the image quality attributed to the clogging of ink discharge nozzles or the like is prevented, and a printed matter in which the generation of a stripe is suppressed is obtained.

Examples

Hereinafter, the present invention will be more specifically described using examples.

(Pigment-dispersed resin)

As a pigment-dispersed resin A, a polymer of 72 parts by mass of styrene, 12 parts by mass of acrylic acid, and 16 parts by mass of methacrylic acid (weight-average molecular weight: 8,200, acid value: 180 mgKOH/g, calculated glass transition temperature (Tg) calculated from the following formula: 116°C) was used.

As a pigment-dispersed resin B, a polymer of 77 parts by mass of styrene, 10 parts by mass of acrylic acid, and 13 parts by mass of methacrylic acid (weight-average molecular weight: 8,800, acid value: 154 mgKOH/g, calculated glass transition temperature (Tg) calculated from the following formula: 113°C) was used.

As a pigment-dispersed resin C, a polymer of 74 parts by mass of styrene, 11 parts by mass of acrylic acid, and 15 parts by mass of methacrylic acid (weight-average molecular weight: 11,000, acid value: 173 mgKOH/g, calculated glass transition temperature (Tg) calculated from the following formula: 115°C) was used.

As a pigment-dispersed resin D, a polymer of 77 parts by mass of styrene, 10 parts by mass of acrylic acid, and 13 parts by mass of methacrylic acid (weight-average molecular weight: 11,000, acid value: 154 mgKOH/g, calculated glass transition temperature (Tg) calculated from the following formula: 113°C) was used.

As a pigment-dispersed resin E, a polymer of 72 parts by mass of styrene, 12 parts by mass of acrylic acid, and 16 parts by mass of methacrylic acid (weight-average molecular weight: 11,000, acid value: 180 mgKOH/g, calculated glass transition temperature calculated from the FOX formula based on the glass transition temperature of a homopolymer: 116°C) was used.

It should be noted that the glass transition temperature (Tg) of the pigment-dispersed resin refers to a value calculated using the FOX formula based on the glass transition temperature of a homopolymer of each monomer used for the production of the pigment-dispersed resin.

$$1/Tg = W1/Tg1 + W2/Tg2 + W3/Tg3 \ldots + Wn/Tgn$$

(In the formula, Tgn represents the glass transition temperature (absolute temperature: K) of the homopolymer of each monomer used for the production of the pigment-dispersed resin, and Wn represents the mass fraction of the monomer).

The glass transition temperature (Tg) of the homopolymer of each monomer used for the production of the pigment-dispersed resin was calculated from the following FOX formula using a value recorded in POLYMER HANDBOOK THIRD EDITION (A WILEY-INTERSCIENCE PUBLICATION). Values of a styrene homopolymer (Tg: 100°C), a methacrylic acid homopolymer (Tg: 228°C), and an acrylic acid homopolymer (Tg: 106°C) were used.

The weight-average molecular weights of the pigment-dispersed resins A to E are values measured by the gel permeation chromatography (GPC) method and are values converted to the molecular weight of polystyrene. The measurement conditions are as described below.

Liquid feeding pump: LC-9A
System controller: SLC-6B
Auto injector: S1L-6B
Detector: RID-6A

All manufactured by Shimadzu Corporation

Data processing software: Sic480II data station (manufactured by System Instruments Co., Ltd.).
Column: GL-R400 (guard column) + GL-R440 + GL-R450 + GL-R400M (manufactured by Hitachi Chemical Co., Ltd.)
Elution solvent: Tetrahydrofuran (THF)
Elution flow rate: 2 mL/min
Column temperature: 35°C

The acid value is a numerical value measured according to Japanese Industrial Standards "K0070:1992, Test methods for acid value, saponification value, ester value, iodine value, hydroxyl value and unsaponifiable matter of chemical products" except that tetrahydrofuran is used as a solvent instead of diethyl ether and refers to the amount (mg) of potassium hydroxide necessary to fully neutralize 1 g of the pigment-dispersed resin.

The viscosity of the aqueous pigment dispersion was measured from an aqueous pigment dispersion maintained at a constant temperature of 25°C as a sample using Viscometer TVE-22L (manufactured by Toki Sangyo Co., Ltd.).

(Example 1)

(Step [1])

Into a 50L jacketed tank of a planetary mixer (PLM-50 manufactured by Inoue MFG., Inc.), 3.0 parts by mass of the pigment-dispersed resin A and 10.0 parts by mass of FASTOGEN BLUE TGR-SD (manufactured by DIC Corporation) as C. I. Pigment Blue 15: 3 were sequentially injected, the jacketed tank was heated to a temperature of 60°C, and then 3.80 parts by mass of triethylene glycol (manufactured by Nippon Shokubai Co., Ltd.) and 1.59 parts by mass of a 34% by mass potassium hydroxide aqueous solution were sequentially supplied to the tank, thereby obtaining a content (a1-1).

(Step [2])

In a state where the temperature of the jacketed tank was maintained at 60°C, the content (a1-1) was stirred at a rotation speed of 30 rpm and a revolution speed of 10 rpm for 10 minutes and then kneaded at a rotation speed of 51 rpm and a revolution speed of 17 rpm for 60 minutes. After the storage elastic modulus of the content was found to reach the value shown in Table 3 (8,000 kPa), the kneading was immediately completed, thereby obtaining a solid-form pigment-kneaded product (a2-1).

(Step [3])

Ion-exchanged water heated to 60°C was added little by little to the pigment-kneaded product (a2-1) and stirred to adjust the pigment concentration to 16.3% by mass, and then triethylene glycol diluted with ion-exchanged water heated to 60°C was further supplied and mixed, thereby obtaining an aqueous pigment dispersion (a3-1) having a pigment concentration of 14.9% by mass, a triethylene glycol concentration of 11.9% by mass, and a non-volatile content of 20.2% by mass. The viscosity of the aqueous pigment dispersion (a3-1) at 25°C was 3.5 mPa·s.

(Step [4])

The aqueous pigment dispersion (a3-1) was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 1.2 L/minute, and continuously centrifugally separated at a centrifugal acceleration of 20,000 G, thereby obtaining an aqueous pigment dispersion (a4-1). The ratio of the supply amount (volume) of the aqueous pigment dispersion (a3-1) with respect to the capacity of the rotor [the supply amount (volume) of the aqueous pigment dispersion (a3-1)/the capacity of the rotor], multiplied by 100, was 3,000%.

(Example 2)

(Step [1])

Into a 50L jacketed tank of a planetary mixer (PLM-50 manufactured by Inoue MFG., Inc.), 4.0 parts by mass of the pigment-dispersed resin B and 10.0 parts by mass of #960 (manufactured by Mitsubishi Chemical Corporation) as C. I. Pigment Black 7 were sequentially injected, the jacketed tank was heated to a temperature of 60°C, and then 10.9 parts by mass of triethylene glycol (manufactured by Nippon Shokubai Co., Ltd.) and 1.78 parts by mass of a 34% by mass potassium hydroxide aqueous solution were sequentially supplied to the tank, thereby obtaining a content (a1-2).

(Step [2])

In a state where the temperature of the jacketed tank was maintained at 60°C, the content (a1-2) was stirred at a rotation speed of 30 rpm and a revolution speed of 10 rpm for 10 minutes and then began to be kneaded at a rotation speed of 71 rpm and a revolution speed of 24 rpm. After 30 minutes from the beginning of the kneading, 0.132 parts by mass of ion-exchanged water was supplied. Next, after 40 minutes from the beginning of the kneading, 0.132 parts by mass of ion-exchanged water was supplied. Next, after 50 minutes from the beginning of the kneading, 0.132 parts by mass of ion-exchanged water was supplied. After 60 minutes elapsed from the beginning of the kneading, the storage elastic modulus of the content was measured. After the storage elastic modulus was found to reach the value shown in Table 3, the kneading was immediately completed, thereby obtaining a solid-form kneaded product (a2-2).

(Step [3])

Ion-exchanged water heated to 60°C was added to the kneaded product (a2-2) and stirred, thereby obtaining an aqueous pigment dispersion (a3-2) having a pigment concentration of 12.9% by mass, a triethylene glycol concentration of 14.1% by mass, and a non-volatile content of 18.8% by mass. The viscosity of the aqueous pigment dispersion (a3-2) at 25°C was 6.5 mPa·s.

(Step [4])

The aqueous pigment dispersion (a3-2) was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-2) was obtained. The ratio of the supply amount (volume) of the aqueous pigment dispersion (a3-2) with respect to the capacity of the rotor [the supply amount (volume) of the aqueous pigment dispersion (a3-2)/the capacity of the rotor], multiplied by 100, was 6, 900%.

(Example 3)

(Step [1])

Into a 50L jacketed tank of a planetary mixer (PLM-50 manufactured by Inoue MFG., Inc.), 3.0 parts by mass of the pigment-dispersed resin C, 10.0 parts by mass of Cinquasia Magenta D4500J (manufactured by BASF SE) as a quinacridone-based pigment, and 0.50 parts by mass of "phthalimide methylated 3,10-dichloroquinacridone (the average number of phthalimide methyl groups per molecule was 1.4)" as a pigment derivative were sequentially injected, the jacketed tank was heated to a temperature of 60°C, and then 4.93 parts by mass of EG-1 (polyethylene oxide adduct of glycerin, manufactured by VANTAGE SPECIALTY CHEMICALS) and 1.55 parts by mass of a 34% by mass potassium hydroxide aqueous solution were sequentially supplied to the tank, thereby obtaining a content (a1-3).

(Step [2])

In a state where the temperature of the jacketed tank was maintained at 60°C, the content (a1-3) was stirred at a rotation speed of 30 rpm and a revolution speed of 10 rpm for 10 minutes and then began to be kneaded at a rotation speed of 36 rpm and a revolution speed of 12 rpm. After 60 minutes elapsed from the beginning of the kneading, the storage elastic modulus of the content was measured. After the storage elastic modulus was found to reach the value shown in Table 3, the kneading was immediately completed, thereby obtaining a solid-form kneaded product (a2-3).

(Step [3])

Ion-exchanged water heated to 60°C was added to the kneaded product (a2-3) and stirred, thereby obtaining an aqueous pigment dispersion (a3-3) having a pigment concentration of 13.4% by mass, a concentration of the polyethylene oxide adduct of glycerin of 6.62% by mass, and a non-volatile content of 18.2% by mass. The viscosity of the aqueous pigment dispersion (a3-3) at 25°C was 4.2 mPa·s.

(Step [4])

The aqueous pigment dispersion (a3-3) was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-3) was obtained. The ratio of the supply amount (volume) of the aqueous pigment dispersion (a3-3) with respect to the capacity of the rotor [the supply amount (volume) of the aqueous pigment dispersion (a3-3)/the capacity of the rotor], multiplied by 100, was 6,100%.

(Example 4)

(Step [1])

Into a 50L jacketed tank of a planetary mixer (PLM-50 manufactured by Inoue MFG., Inc.), 2.05 parts by mass of the pigment-dispersed resin C, 10.0 parts by mass of FASTOGEN Super Magenta RY (manufactured by DIC Corporation) as a quinacridone-based pigment, and 0.26 parts by mass of "phthalimide methylated 3,10-dichloroquinacridone (the average number of phthalimide methyl groups per molecule was 1.4)" as a pigment derivative were sequentially injected, the jacketed tank was heated to a temperature of 40°C, and then 7.06 parts by mass of triethylene glycol (manufactured by Nippon Shokubai Co., Ltd.) and 1.06 parts by mass of a 34% by mass potassium hydroxide aqueous solution were sequentially supplied to the tank, thereby obtaining a content (a1-4).

(Step [2])

In a state where the temperature of the jacketed tank was maintained at 40°C, the content (a1-4) was stirred at a rotation speed of 30 rpm and a revolution speed of 10 rpm for 10 minutes and then kneaded at a rotation speed of 36 rpm and a revolution speed of 12 rpm for 60 minutes. After the storage elastic modulus of the content was found to reach the value shown in Table 3, the kneading was immediately completed, thereby obtaining a solid-form kneaded product (a2-4).

(Step [3])

Ion-exchanged water heated to 50°C was added to the kneaded product (a2-4) and stirred to adjust the pigment concentration to 19.0% by mass, and then triethylene glycol diluted with ion-exchanged water heated to 50°C was further supplied and mixed, thereby obtaining an aqueous pigment dispersion (a3-4) having a pigment concentration of 16.7% by mass, a triethylene glycol concentration of 12.9% by mass, and a non-volatile content of 22.7% by mass.
Subsequently, a chelate resin composition obtained by sequentially adding 5.65% by mass of pure water, 0.59% by mass of Chelest Fiber IRY-LW (manufactured by Chelest Corporation, iminodiacetic acid-type chelate resin), and 0.05% by mass of 48% by mass potassium hydroxide to a stainless steel drum and sufficiently stirring the contents was injected into the aqueous pigment dispersion (a3-4) and stirred for three hours. After the completion of the stirring, the mixture of the aqueous pigment dispersion (4) and the chelate resin composition was filtered with a sieve with 270 mesh (pore diameter: 53 μm) to remove the chelate resin, thereby obtaining an aqueous pigment dispersion (a3-4) having a non-volatile content of 21.0% by mass. The viscosity of the aqueous pigment dispersion (a3-4) at 25°C was 4.2 mPa·s.

(Step [4])

The aqueous pigment dispersion (a3-4) was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-4) was obtained. The ratio of the supply amount (volume) of the aqueous pigment dispersion (a3-4) with respect to the capacity of the rotor [the supply amount (volume) of the aqueous pigment dispersion (a3-4)/the capacity of the rotor], multiplied by 100, was 3,700%.

(Example 5)

(Step [1])

Into a 50L jacketed tank of a planetary mixer (PLM-50 manufactured by Inoue MFG., Inc.), 3.0 parts by mass of the pigment-dispersed resin D and 10.0 parts by mass of Paliogen Red K3580 (manufactured by BASF SE) as C. I. Pigment Red 149 were sequentially injected, the jacketed tank was heated to a temperature of 60°C, and then 5.58 parts by mass of triethylene glycol (manufactured by Nippon Shokubai Co., Ltd.), 1.36 parts by mass of a 34% by mass potassium hydroxide aqueous solution, and 0.43% by mass of ion-exchanged water were sequentially supplied to the tank, thereby obtaining a content (a1-5) .

(Step [2])

In a state where the temperature of the jacketed tank was maintained at 60°C, the content (a1-5) was stirred at a rotation speed of 15 rpm and a revolution speed of 5 rpm for 10 minutes and then began to be kneaded at a rotation speed of 60 rpm and a revolution speed of 20 rpm. After 30 minutes after the beginning of the kneading, 0.10% by mass of triethylene glycol was supplied. After 60 minutes elapsed from the beginning of the kneading, the storage elastic modulus of the content was measured. After the storage elastic modulus was found to reach the value shown in Table 3, the kneading was immediately completed, thereby obtaining a solid-form kneaded product (a2-5).

(Step [3])

Ion-exchanged water heated to 60°C was added to the kneaded product (a2-5) and stirred to adjust the pigment concentration to 18.9% by mass, and then triethylene glycol diluted with ion-exchanged water heated to 60°C was further supplied and mixed, thereby obtaining an aqueous pigment dispersion (a3-5) having a pigment concentration of 16.0% by mass, a triethylene glycol concentration of 9.1% by mass, and a non-volatile content of 21.5% by mass.
The aqueous pigment dispersion (a3-5) cooled to 25°C or lower was fed into a bead mill (NANOMILL NM-G2L manufactured by Asada Iron Works Co., Ltd.) 80% filled with φ0.3 mm zirconia beads at a flow rate of 1.2 L/min-1 and passed through a dispersion apparatus twice at a revolutions of 2,300 min$^{-1}$, thereby obtaining an aqueous pigment dispersion (a3-5) having a non-volatile content of 21.5% by mass. The viscosity of the aqueous pigment dispersion (a3-5) at 25°C was 7.7 mPa·s.

(Step [4])

The aqueous pigment dispersion (a3-5) was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 0.8 L/minute, and continuously centrifugally separated at a centrifugal acceleration of 20,000 G, and an aqueous pigment dispersion (a4-5) was obtained. The ratio of the supply amount (volume) of the aqueous pigment dispersion (a3-5) with respect to the capacity of the rotor [the supply amount (volume) of the aqueous pigment dispersion (a3-5)/the capacity of the rotor], multiplied by 100, was 2,100%.

(Comparative Example 1)

(Step [1])

Into a 50L jacketed tank of a planetary mixer (PLM-50 manufactured by Inoue MFG., Inc.), 3.0 parts by mass of the pigment-dispersed resin A and 10.0 parts by mass of FASTOGEN BLUE TGR-SD (manufactured by DIC Corporation) as C. I. Pigment Blue 15: 3 were sequentially injected, the jacketed tank was heated to a temperature of 60°C, and then 5.33 parts by mass of triethylene glycol (manufactured by Nippon Shokubai Co., Ltd.) and 1.59 parts by mass of a 34% by mass potassium hydroxide aqueous solution were sequentially supplied to the tank, thereby obtaining a content (a1-1').

(Step [2])

In a state where the temperature of the jacketed tank was maintained at 60°C, the content (a1-1') was stirred at a rotation speed of 30 rpm and a revolution speed of 10 rpm for 10 minutes and then kneaded at a rotation speed of 51 rpm and a revolution speed of 17 rpm for 60 minutes. After the storage elastic modulus of the content was found to reach the value shown in Table 3, the kneading was immediately completed, thereby obtaining a solid-form pigment-kneaded product (a2-1').

(Step [3])

Ion-exchanged water heated to 60°C was added little by little to the pigment-kneaded product (a2-1') and stirred to adjust the pigment concentration to 15.9% by mass, and then triethylene glycol diluted with ion-exchanged water heated to 60°C was further supplied and mixed, thereby obtaining an aqueous pigment dispersion (a3-1') having a pigment concentration of 14.9% by mass, a triethylene glycol concentration of 11.9% by mass, and a non-volatile content of 20.2% by mass. The viscosity of the aqueous pigment dispersion (a3-1') at 25°C was 3.5 mPa·s.

(Step [4])

The aqueous pigment dispersion (a3-1') was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 1.2 L/minute, and continuously centrifugally separated at a centrifugal acceleration of 20,000 G, thereby obtaining an aqueous pigment dispersion (a4-1'). The ratio of the supply amount (volume) of the aqueous pigment dispersion (a3-1') with respect to the capacity of the rotor [the supply amount (volume) of the aqueous pigment dispersion (a3-1')/the capacity of the rotor], multiplied by 100, was 3,000%.

(Comparative example 2)

(Step [1])

Into a 50L jacketed tank of a planetary mixer (PLM-50 manufactured by Inoue MFG., Inc.), 4.0 parts by mass of the pigment-dispersed resin B and 10.0 parts by mass of #960 (manufactured by Mitsubishi Chemical Corporation) as C. I. Pigment Black 7 were sequentially injected, the jacketed tank was heated to a temperature of 60°C, and then 15.5 parts by mass of triethylene glycol (manufactured by Nippon Shokubai Co., Ltd.) and 1.78 parts by mass of a 34% by mass potassium hydroxide aqueous solution were sequentially supplied to the tank, thereby obtaining a content (a1-2').

(Step [2])

In a state where the temperature of the jacketed tank was maintained at 60°C, the content (a1-2') was stirred at a rotation speed of 30 rpm and a revolution speed of 10 rpm for 10 minutes and then began to be kneaded at a rotation speed of 71 rpm and a revolution speed of 24 rpm. After 30 minutes from the beginning of the kneading, 0.132 parts by mass of ion-exchanged water was supplied. Next, after 40 minutes from the beginning of the kneading, 0.132 parts by mass of ion-exchanged water was supplied. Next, after 50 minutes from the beginning of the kneading, 0.132 parts by mass of ion-exchanged water was supplied. After 60 minutes elapsed from the beginning of the kneading, the storage elastic modulus of the content was measured. After the storage elastic modulus was found to reach the value shown in Table 3, the kneading was immediately completed, thereby obtaining a solid-form kneaded product (a2-2').

(Step [3])

Ion-exchanged water heated to 60°C was added to the kneaded product (a2-2') and stirred, thereby obtaining an aqueous pigment dispersion (a3-2') having a pigment concentration of 12.9% by mass, a triethylene glycol concentration of 19.9% by mass, and a non-volatile content of 18.8% by mass. The viscosity of the aqueous pigment dispersion (a3-2') at 25°C was 6.9 mPa·s.

(Step [4])

The aqueous pigment dispersion (a3-2') was heated to 60°C with a heat-exchanging apparatus (vacuum steam heating system manufactured by TLV Co., Ltd.), supplied to a cylindrical centrifugal separator (ultracentrifuge ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-2') was obtained. The ratio of the supply amount (volume) of the aqueous pigment dispersion (a3-2') with respect to the capacity of the rotor [the supply amount (volume) of the aqueous pigment dispersion (a3-2')/the capacity of the rotor], multiplied by 100, was 6,900%.

(Example 6)

An aqueous pigment dispersion (a4-6) was obtained by the same method as in Example 1 except that the temperature to which the aqueous pigment dispersion (a3-1) was heated with the heat-exchanging apparatus (manufactured by TLV Co., Ltd., vacuum steam heating system) was changed from 60°C to 40°C.

(Example 7)

(Step [2])

First, the same content (a1-7) as the content (a1-2) was prepared by the same method as the method described in the step [1] of Example 2.

Next, in a state where the temperature of the jacketed tank was maintained at 60°C, the content (a1-7) was stirred at a rotation speed of 30 rpm and a revolution speed of 10 rpm for 10 minutes and then began to be kneaded at a rotation speed of 71 rpm and a revolution speed of 24 rpm. After 30 minutes from the beginning of the kneading, 0.132 parts by mass of ion-exchanged water was supplied. Next, after 40 minutes from the beginning of the kneading, 0.132 parts by mass of ion-exchanged water was supplied. Next, after 50 minutes from the beginning of the kneading, 0.132 parts by mass of ion-exchanged water was supplied. After 60 minutes elapsed from the beginning of the kneading, the storage elastic modulus of the content was measured. After the storage elastic modulus was found to reach the value shown in Table 3, the kneading was immediately completed, thereby obtaining a solid-form kneaded product (a2-7).

(Step [3])

Ion-exchanged water heated to 60°C was added to the kneaded product (a2-7) and stirred, thereby obtaining an aqueous pigment dispersion (a3-7) having a pigment concentration of 15.2% by mass, a triethylene glycol concentration of 16.6% by mass, and a non-volatile content of 22.2% by mass. The viscosity of the aqueous pigment dispersion (a3-7) at 25°C was 9.8 mPa·s.

(Step [4])

The aqueous pigment dispersion (a3-7) was heated to 60°C with a heat-exchanging apparatus (vacuum steam heating system manufactured by TLV Co., Ltd.), supplied to a cylindrical centrifugal separator (ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-7) was obtained. The ratio of the supply amount (volume) of the aqueous pigment dispersion (a3-7) with respect to the capacity of the rotor [the supply amount (volume) of the aqueous pigment dispersion (a3-7)/the capacity of the rotor], multiplied by 100, was 6,900%.

(Example 8)

An aqueous pigment dispersion (a4-8) was obtained by the same method as in Example 2 except that the centrifugal acceleration in the step [4] was changed from 20,000G to 9,000G.

(Example 9)

An aqueous pigment dispersion (a4-9) was obtained by the same method as in Example 2 except that the ratio of the supply amount (volume) of the aqueous pigment dispersion (a3-9) with respect to the capacity of the rotor [the supply amount (volume) of the aqueous pigment dispersion (a3-9)/the capacity of the rotor], multiplied by 100, in the step [4] was changed from 6,900% to 7,900%.

(Example 10)

An aqueous pigment dispersion (a4-10) was obtained by the same method as in Example 1 except that the temperature to which the aqueous pigment dispersion (a3-1) was heated with the heat-exchanging apparatus (manufactured by TLV Co., Ltd., vacuum steam heating system) was changed from 60°C to 25°C.

(Example 11)

An aqueous pigment dispersion (a4-11) was obtained by the same method as in Example 1 except that the temperature to which the aqueous pigment dispersion (a3-1) was heated with the heat-exchanging apparatus (manufactured by TLV Co., Ltd., vacuum steam heating system) was changed from 60°C to 25°C, a centrifugal separator having a circular truncated cone-shaped rotor (H-600S, rotor capacity: 2.0L, manufactured by Kokusan Co., Ltd.) was used instead of the cylindrical centrifugal separator (ASM260FH, rotor capacity: 7.7L, manufactured by Tomoe Engineering Co., Ltd.), the aqueous pigment dispersion was supplied at a liquid feeding rate of 0.2 L/minute, and the centrifugal separation treatment was continuously performed at a centrifugal acceleration of 20,000G.

(Reference Example 1)

(Step [1])

Into a 50L jacketed tank of a planetary mixer (PLM-50 manufactured by Inoue MFG., Inc.), 4.0 parts by mass of the pigment-dispersed resin B and 10.0 parts by mass of C. I. Pigment Black 7 (manufactured by Mitsubishi Chemical Corporation, #960) were sequentially injected, the jacketed tank was heated to a temperature of 60°C, and then 13.5 parts by mass of triethylene glycol and 1.78 parts by mass of a 34% by mass potassium hydroxide aqueous solution were sequentially supplied to the tank, thereby obtaining a content (a1-1").

(Step [2])

In a state where the temperature of the jacketed tank was maintained at 60°C, the content (a1-1") was stirred at a rotation speed of 30 rpm and a revolution speed of 10 rpm for 10 minutes and then began to be kneaded at a rotation speed of 71 rpm and a revolution speed of 24 rpm. After 30 minutes from the beginning of the kneading, 0.132 parts by mass of ion-exchanged water was supplied. Next, after 40 minutes from the beginning of the kneading, 0.132 parts by mass of ion-exchanged water was supplied. Next, after 50 minutes from the beginning of the kneading, 0.132 parts by mass of ion-exchanged water was supplied. The kneading was completed after 60 minutes from the beginning of the kneading, thereby obtaining a solid-form kneaded product (a2-1").

(Step [3])

Ion-exchanged water heated to 60°C was added to the kneaded product (a2-1") and stirred, thereby obtaining an aqueous pigment dispersion (a3-1") having a pigment concentration of 12.9% by mass, a triethylene glycol concentration of 17.4% by mass, and a non-volatile content of 18.8% by mass. The viscosity of the aqueous pigment dispersion (a3-1") at 25°C was 6.7 mPa·s.

(Step [4])

The aqueous pigment dispersion (a3-1") was heated to 60°C with a heat-exchanging apparatus (vacuum steam heating system manufactured by TLV Co., Ltd.), supplied to a cylindrical centrifugal separator (ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-1") was obtained. The ratio of the supply amount (volume) of the aqueous pigment dispersion (a3-1") with respect to the capacity of the rotor [the supply amount (volume) of the aqueous pigment dispersion (a3-1")/the capacity of the rotor], multiplied by 100, was 6,900%.

(Reference Example 2)

(Step [1])

Into a 50L jacketed tank of a planetary mixer (PLM-50 manufactured by Inoue MFG., Inc.), 3.0 parts by mass of the pigment-dispersed resin E and 10.0 parts by mass of C. I. Pigment Yellow 74 (manufactured by Sanyo Color Works, Ltd., Fast Yellow 7413) were sequentially injected, the jacketed tank was heated to a temperature of 30°C, and then 5.67 parts by mass of triethylene glycol and 1.62 parts by mass of a 34% by mass potassium hydroxide aqueous solution were sequentially supplied to the tank, thereby obtaining a content (a1-2").

(Step [2])

In a state where the temperature of the jacketed tank was maintained at 30°C, the content (a1-2") was stirred at a rotation speed of 30 rpm and a revolution speed of 10 rpm for 10 minutes and then began to be kneaded at a rotation speed of 36 rpm and a revolution speed of 12 rpm. After 30 minutes after the beginning of the kneading, 0.07 parts by mass of triethylene glycol was supplied. Next, after 40 minutes after the beginning of the kneading, 0.07 parts by mass of triethylene glycol was supplied. Next, after 50 minutes after the beginning of the kneading, 0.07 parts by mass of triethylene glycol was supplied. The kneading was completed after 60 minutes from the beginning of the kneading, thereby obtaining a solid-form kneaded product (a2-2").

(Step [3])

Ion-exchanged water heated to 60°C was added to the kneaded product (a2-2") and stirred to adjust the pigment concentration to 16.0% by mass, and then triethylene glycol diluted with ion-exchanged water heated to 60°C was further supplied and mixed, thereby obtaining an aqueous pigment dispersion (a3-2") having a pigment concentration of 15.1% by mass, a triethylene glycol concentration of 11.8% by mass, and a non-volatile content of 20.4% by mass. The viscosity of the aqueous pigment dispersion (a3-2") at 25°C was 4.5 mPa·s.

(Step [4])

The aqueous pigment dispersion (a3-2") was heated to 60°C with a heat-exchanging apparatus (vacuum steam heating system manufactured by TLV Co., Ltd.), supplied to a cylindrical centrifugal separator (ASM260FH, rotor capacity: 7.7L, manufactured by Tomoe Engineering Co., Ltd.) at a liquid feeding rate of 1.6 L/minute, and continuously centrifugally separated at a centrifugal acceleration of 20,000 G, and an aqueous pigment dispersion (a4-2") was obtained. The ratio of the supply amount (volume) of the aqueous pigment dispersion (a3-2") with respect to the capacity of the rotor [the supply amount (volume) of the aqueous pigment dispersion (a3-2")/the capacity of the rotor], multiplied by 100, was 3,000%.

(Reference Example 3)

An aqueous pigment dispersion (a3-3") was obtained by the same method as in Reference Example 2 except that the ratio of the supply amount (volume) of the aqueous pigment dispersion (a3-2") with respect to the capacity of the rotor [the supply amount (volume) of the aqueous pigment dispersion (a3-2")/the capacity of the rotor], multiplied by 100, in the step [3] was changed from 3,000% to 1,200%.

(Storage elastic modulus in measurement of dynamic viscoelasticity)

The content (a1) obtained in each of the examples or the comparative examples was placed on a sample table of a rotary rheometer MCR102 manufactured by Anton Paar GmbH and sandwiched with parallel plates, the dynamic viscoelasticity was measured in accordance with "JIS K 7224-10: 2005" at angular frequencies of 1 to 100 rad/s under a condition of 25°C, and the storage elastic modulus at 1 rad/s was obtained.
It should be noted that the measurement conditions were selected depending on the properties of the content (a1) so that it was possible to more accurately measure the storage elastic modulus of the content (a1). Specifically, the measurement conditions for the content (a1) that were used in the examples in which the storage elastic modulus was estimated to be several hundred kilopascals or more and the measurement conditions for the content that were used in the comparative examples in which the storage elastic modulus was estimated to be less than 100 kPa were separately set as shown below.

[Table 1]

| Table 1 | Measurement temperature (°C) | Strain (%) | Gap (mm) | Diameter of parallel plate (mm) |
|---------|------------------------------|------------|----------|----------------------------------|
| Example | 25 | 0.02 | 2 | 8 |

(continued)

| Table 1 | Measurement temperature (°C) | Strain (%) | Gap (mm) | Diameter of parallel plate (mm) |
|---|---|---|---|---|
| Comparative Example | 25 | 0.1 | 1 | 25 |

(Method for producing aqueous ink for inkjet printing)

The aqueous pigment dispersion obtained in each of the examples, the comparative examples, and the reference examples was mixed with ion-exchanged water, thereby obtaining a diluted solution of the aqueous pigment dispersion having a pigment concentration of 6% by mass.

Next, a liquid mixture containing 8.0 parts by mass of 2-pyrrolidinone, 8.0 parts by mass of triethylene glycol mono-n-butyl ether, 3. 0 parts by mass of glycerin, and 0. 5 parts by mass of SURFYNOL 440 (manufactured by Air Products and Chemicals, Inc.), and 30.5 parts by mass of ion-exchanged water and 50 parts by mass of the diluted solution of the aqueous pigment dispersion were mixed and stirred, thereby obtaining aqueous ink for inkjet printing having a pigment concentration of 3% by mass.

[Method for measuring volume-average particle diameter]

The aqueous pigment dispersion immediately after being produced that was obtained in each of the examples, the comparative examples, and the reference examples was diluted with ion-exchanged water at the following magnification to produce a measurement sample, and the volume-average particle diameter was measured under the following measurement conditions. The volume-average particle diameter of the dispersion at 25°C in the measurement sample was measured using a particle size distribution measuring instrument (manufactured by Nikkiso Co., Ltd.: Microtrac model name Nanotrac-UPA150). At the time of the measurement, the set conditions ("transmissivity", "shape", "solvent refractive index", and "density") of the particle size distribution measuring instrument were set as described below. That is, the measurement conditions of the volume-average particle diameter of the dispersion of the aqueous pigment dispersion obtained by using the same pigment were set to be the same.

[Table 2]

| Table 2 | Measurement conditions | | | | Dilution factor (times) |
|---|---|---|---|---|---|
| | Transmissivity | Shape | Density (g/cm$^3$) | Solvent refractive index | |
| Examples 1, 6, 10, and 11 Comparative Example 1 | Absorption | Non-spherical | 1.36 | 1.333 | 5000 |
| Examples 2,7 to 9, Reference Example 1, Comparative Example 2 | Absorption | Non-spherical | 1.45 | 1.333 | 2000 |
| Example 3 | Absorption | Non-spherical | 1.30 | 1.333 | 500 |
| Example 4 | Absorption | Non-spherical | 1.30 | 1.333 | 100 |
| Example 5 | Absorption | Non-spherical | 1.30 | 1.333 | 10 |
| Reference Examples 2 and 3 | Absorption | Non-spherical | 1.25 | 1.333 | 200 |

[Method for measuring number of coarse particles]

The aqueous pigment dispersion obtained in each of the examples, the comparative examples, and the reference examples was diluted with ion-exchanged water to produce a measurement sample. The number of coarse particles having a diameter of 0.5 $\mu$m or more that were contained in the measurement sample was measured using a particle size distribution analyzer by a number counting method (manufactured by Particle Sizing Systems: AccuSizer 780APS). The number of coarse particles measured by the above-described method was multiplied by the dilution factor, thereby calculating the number of coarse particles contained in 1 mL of the aqueous pigment dispersion of each of the examples and the comparative examples. It should be noted that, regarding the dilution factor of the aqueous pigment dispersion, the aqueous pigment dispersion was diluted such that the number of coarse particles having a particle diameter (diameter) of 0.5 μm or larger passing through the detector per second reached 1,000 to 4,000 particles/mL.

[Method for evaluating presence or absence of generation of coarse particles over time in aqueous pigment dispersion (preservation stability)]

The number of coarse particles contained in the aqueous pigment dispersion immediately after being produced was measured by the above-described method.

Next, the aqueous pigment dispersion was sealed in a polypropylene container and left to stand under a condition of 60°C for four weeks.
Next, the number of coarse particles contained in the aqueous pigment dispersion after being left to stand was measured by the above-described method.

Next, the change rate (%) of the number of coarse particles before and after being left to stand was calculated based on [(the number of coarse particles contained in the aqueous pigment dispersion after being left to stand)/(the number of coarse particles contained in the aqueous pigment dispersion immediately after being produced) x 100] and evaluated according to the following criteria. An aqueous pigment dispersion for which the change rate of the number of coarse particles was evaluated as A or B was evaluated to have practically sufficient preservation stability.

A: The change rate is less than 10%
B: The change rate is 10% or more and less than 20%
C: The change rate is 20% or more

[Method for evaluating presence or absence of generation of coarse particles over time in aqueous ink for inkjet printing (preservation stability)]

The number of coarse particles contained in the aqueous ink for inkjet printing immediately after being produced was measured by the above-described method.

Next, the aqueous ink for inkjet printing was sealed in a polypropylene container and left to stand under a condition of 60°C for four weeks.

Next, The number of coarse particles contained in the aqueous ink for inkjet printing after being left to stand was measured by the above-described method.

Next, the change rate (%) of the number of coarse particles before and after being left to stand was calculated based on [(the number of coarse particles contained in the aqueous ink for inkjet printing after being left to stand) / (the number of coarse particles contained in the aqueous ink for inkjet printing immediately after being produced) x 100] and evaluated according to the following criteria. An aqueous pigment dispersion for which the change rate of the number of coarse particles was evaluated as A or B was evaluated to have practically sufficient preservation stability.

A: The change rate is less than 10%
B: The change rate is 10% or more and less than 20%
C: The change rate is 20% or more

[Method for evaluating presence or absence of sedimentation of pigment or the like contained in aqueous ink for inkjet printing over time (sedimentation property)]

The aqueous ink for inkjet printing obtained in each of the examples and the comparative examples was put into a glass vial having a capacity of 10 mL, sealed, and left to stand for two weeks under a condition of 25°C.

When the glass vial was inverted after being left to stand, the adhesion of a sediment of the pigment or the like to the wall surface of the glass vial was visually observed and evaluated according to the following criteria. An aqueous ink for inkjet printing for which the presence or absence of the sedimentation of the pigment or the like was evaluated as A or B was evaluated to be less likely to cause sedimentation over time.

A: It was not possible to find any adhesion of a sediment of the pigment or the like to the wall surface of the glass vial.
B: Adhesion of a sediment of the pigment or the like to the wall surface of the glass vial was found.
C: Significant adhesion of a sediment of the pigment or the like to the wall surface of the glass vial was found.

[Initial discharge stability of aqueous ink for inkjet printing]

The discharge stability of the aqueous ink for inkjet printing immediately after being produced was evaluated using a commercially available inkjet printer ENVY4500 (manufactured by HP). A black ink cartridge was filled with the aqueous ink for inkjet printing, and a nozzle check pattern was printed (first printing). Next, solid printing was performed on an A4 sheet in a 340 cm$^2$ range in a monochrome mode with a printing concentration set to 100%. Next, a nozzle check test pattern was printed again (second printing). The nozzle check test patterns of the first printing and the second printing were compared with each other, thereby evaluating the clogging state of an ink discharge nozzle. An aqueous ink for inkjet printing for which the clogging state of an ink discharge nozzle was evaluated as AA, A, or B was evaluated to have practically sufficient initial discharge stability.

AA No chipping occurred from the printed patterns in both nozzle check test patterns of the first printing and the second printing

A: The number of chips on the printed pattern found in the nozzle check test pattern of the first printing was the same as the number of chips on the printed pattern found in the nozzle check test pattern of the second printing.

B: The number of chips on the printed pattern found in the nozzle check test pattern of the second printing was larger by one to five than the number of chips on the printed pattern found in the nozzle check test pattern of the first printing.

C: The number of chips on the printed pattern found in the nozzle check test pattern of the second printing was larger by six or more than the number of chips on the printed pattern found in the nozzle check test pattern of the first printing.

[Temporal discharge stability of aqueous ink for inkjet printing]

The aqueous ink for inkjet printing immediately after being produced was loaded into a black ink cartridge and left to stand at normal temperature for four weeks.

Next, evaluation was performed using a commercially available inkjet printer ENVY4500 (manufactured by HP). A black ink cartridge was filled with the aqueous ink for inkjet printing, and a nozzle check pattern was printed (first printing). Next, solid printing was performed on an A4 sheet in a 340 cm$^2$ range in a monochrome mode with a printing concentration set to 100%. Next, a nozzle check test pattern was printed again (second printing). The nozzle check test patterns of the first printing and the second printing were compared with each other, thereby evaluating the clogging state of an ink discharge nozzle. An aqueous ink for inkjet printing for which the clogging state of an ink discharge nozzle was evaluated as A, B, or C was evaluated to have practically sufficient temporal discharge stability.

AA: No chipping occurred from the printed patterns in both nozzle check test patterns of the first printing and the second printing

A: The number of chips on the printed pattern found in the nozzle check test pattern of the first printing was the same as the number of chips on the printed pattern found in the nozzle check test pattern of the second printing.

B: The number of chips on the printed pattern found in the nozzle check test pattern of the second printing was larger by one to five than the number of chips on the printed pattern found in the nozzle check test pattern of the first printing.

C: The number of chips on the printed pattern found in the nozzle check test pattern of the second printing was larger by six or more than the number of chips on the printed pattern found in the nozzle check test pattern of the first printing.

[Table 3]

| Table 3 | Step [1] | Step [2] | | |
|---|---|---|---|---|
| | Non-volatile content of content (a1) (% by mass) | Temperature of content (a1) at completion of kneading (°C) | Non-volatile content of mixture (% by mass) | Storage elastic modulus of content (a1) at angular frequency of 1 rad/s at completion of kneading (kPa) |
| Example 1 | 73.6 | 96 | 73.6 | 8000 |
| Example 2 | 54.7 | 109 | 53.9 | 290 |
| Example 3 | 70.2 | 86 | 70.2 | 2200 |

(continued)

| Table 3 | Step [1] | Step [2] | | |
| --- | --- | --- | --- | --- |
| | Non-volatile content of content (a1) (% by mass) | Temperature of content (a1) at completion of kneading (°C) | Non-volatile content of mixture (% by mass) | Storage elastic modulus of content (a1) at angular frequency of 1 rad/s at completion of kneading (kPa) |
| Example 4 | 62.0 | 85 | 62.0 | 6200 |
| Example 5 | 67.5 | 85 | 65.8 | 25000 |
| Example 6 | 73.6 | 96 | 73.6 | 8000 |
| Example 7 | 54.7 | 109 | 53.9 | 290 |
| Example 8 | 54.7 | 109 | 53.9 | 290 |
| Example 9 | 54.7 | 109 | 53.9 | 290 |
| Example 10 | 73.6 | 96 | 73.6 | 8000 |
| Example 11 | 73.6 | 96 | 73.6 | 8000 |
| Reference Example 2 | 66.8 | 75 | 66.1 | - |
| Reference Example 3 | 66.8 | 75 | 66.1 | - |
| Comparative Example 1 | 68.0 | 72 | 68.0 | 68 |
| Comparative Example 2 | 46.7 | 70 | 46.2 | 5 |
| Reference Example 1 | 49.8 | 73 | 49.2 | - |

[Table 4]

| Table 4 | Step [3] | | Step [4] | | | | | |
|---|---|---|---|---|---|---|---|
| | Non-volatile content of aqueous pigment dispersion before centrifugal separation treatment (% by mass) | Viscosity of aqueous pigment dispersion at 25°C (mPa·s) | Rotor | Rotor capacity (L) | Temperature of aqueous pigment dispersion (°C) | Centrifugal acceleration (G) | Amount of aqueous pigment dispersion supplied/ rotor capacity (%) |
| Example 1 | 20.2 | 3.5 | Cylindrical rotor | 7.7 | 60 | 20000 | 3000 |
| Example 2 | 18.8 | 6.5 | Cylindrical rotor | 7.7 | 60 | 20000 | 6900 |
| Example 3 | 18.2 | 4.2 | Cylindrical rotor | 7.7 | 60 | 20000 | 6100 |
| Example 4 | 21.0 | 4.2 | Cylindrical rotor | 7.7 | 60 | 20000 | 3700 |
| Example 5 | 22.5 | 7.7 | Cylindrical rotor | 7.7 | 60 | 20000 | 2100 |
| Example 6 | 20.2 | 3.5 | Cylindrical rotor | 7.7 | 40 | 20000 | 3000 |
| Example 7 | 22.2 | 9.8 | Cylindrical rotor | 7.7 | 60 | 20000 | 6900 |
| Example 8 | 18.8 | 6.5 | Cylindrical rotor | 7.7 | 60 | 9000 | 6900 |
| Example 9 | 18.8 | 6.5 | Cylindrical rotor | 7.7 | 60 | 20000 | 7900 |
| Example 10 | 20.2 | 3.5 | Cylindrical rotor | 7.7 | 25 | 20000 | 3000 |
| Example 11 | 20.2 | 3.5 | Circular truncated cone-shaped rotor | 2.0 | 25 | 20000 | 3000 |
| Reference Example 2 | 20.4 | 4.5 | Cylindrical rotor | 7.7 | 60 | 20000 | 3000 |
| Reference Example 3 | 20.4 | 4.5 | Cylindrical rotor | 7.7 | 60 | 20000 | 1200 |
| Comparative Example 1 | 20.2 | 3.5 | Cylindrical rotor | 7.7 | 60 | 20000 | 3000 |
| Comparative Example 2 | 18.8 | 6.9 | Cylindrical rotor | 7.7 | 60 | 20000 | 6900 |
| Reference Example 1 | 18.8 | 6.7 | Cylindrical rotor | 7.7 | 60 | 20000 | 6900 |

EP 3 805 324 A1

[Table 5]

| Table 5 | Evaluation | | | | | | |
|---|---|---|---|---|---|---|---|
| | Aqueous pigment dispersion | | | Ink for inkjet printing | | | |
| | Volume-average particle diameter (nm) | Number of coarse particles (x $10^6$ particles /ml) | Preservation stability | Preservation stability | Sedimentation property | Initial discharge stability | Temporal discharge stability |
| Example 1 | 113 | 550 | A | A | A | AA | AA |
| Example 2 | 114 | 380 | A | A | A | AA | AA |
| Example 3 | 100 | 120 | A | A | A | AA | AA |
| Example 4 | 117 | 60 | A | A | A | AA | AA |
| Example 5 | 38 | 80 | A | A | A | AA | AA |
| Example 6 | 113 | 690 | A | A | A | A | A |
| Example 7 | 115 | 550 | A | A | A | A | A |
| Example 8 | 115 | 710 | A | A | A | A | A |
| Example 9 | 114 | 390 | A | A | A | AA | AA |
| Example 10 | 114 | 910 | A | B | B | A | B |
| Example 11 | 114 | 1100 | A | B | B | B | B |
| Reference Example 2 | 87 | 340 | A | A | A | AA | AA |
| Reference Example 3 | 86 | 270 | A | A | A | AA | AA |
| Comparative Example 1 | 117 | 3300 | B | C | C | B | C |
| Comparative Example 2 | 124 | 6400 | C | C | C | B | C |
| Reference Example 1 | 117 | 2900 | B | C | C | B | C |

**Claims**

1. A method for producing a pigment-kneaded product, comprising:

   a step [1] of supplying at least a pigment and a resin to a container provided in a kneading apparatus; and
   a step [2] of kneading the resulting content (content (a1)) present in the container until a storage elastic modulus of the content (a1) at an angular frequency of 1 rad/s, which is obtained by measurement of dynamic viscoelasticity at 25°C, reaches a range of 200 kPa to 30,000 kPa.

2. The method for producing a pigment-kneaded product according to claim 1,
   wherein the content (a1) has a non-volatile content of 50% by mass or more.

3. The method for producing a pigment-kneaded product according to claim 1 or 2,
   wherein the step [2] is a step which is performed in a state where a temperature of the content (a1) is maintained at 60°C to 120°C.

4. The method for producing a pigment-kneaded product according to any one of claims 1 to 3,
   wherein the kneading apparatus is a closing type kneading apparatus.

5. The method for producing a pigment-kneaded product according to claim 4,
   wherein the kneading apparatus is a planetary mixer.

6. A method for producing an aqueous pigment dispersion, comprising:
   a step [3] of mixing the pigment-kneaded product obtained by the production method according to any one of claims 1 to 5 with an aqueous medium.

7. The method for producing an aqueous pigment dispersion according to claim 6,
   wherein the step [3] is a step of adjusting a non-volatile content of an aqueous pigment dispersion to 10% by mass to 30% by mass by supplying the aqueous medium to the pigment-kneaded product.

8. The method for producing an aqueous pigment dispersion according to claim 6 or 7, further comprising:
   a step [4] of centrifugally separating the aqueous pigment dispersion obtained in the step [3] at 30°C to 70°C.

9. The method for producing an aqueous pigment dispersion according to claim 8,
   wherein the step [4] is a step performed by using a cylindrical centrifugal separation apparatus.

10. The method for producing an aqueous pigment dispersion according to claim 8 or 9,
    wherein the step [4] is a step of using an aqueous pigment dispersion having a viscosity of 13 mPa·s or less at 25°C as the aqueous pigment dispersion obtained in the step [3] and centrifugally separating the aqueous pigment dispersion with a cylindrical centrifugal separation apparatus.

11. The method for producing an aqueous pigment dispersion according to any one of claims 8 to 10,
    wherein the step [4] is a step of supplying the aqueous pigment dispersion obtained in the step [3] to a rotor provided in a cylindrical centrifugal separation apparatus and centrifugally separating the aqueous pigment dispersion while maintaining a temperature of the aqueous pigment dispersion at 30°C to 70°C, wherein a ratio of a supply amount (volume) of the aqueous pigment dispersion obtained in the step [3] with respect to a capacity of the rotor [the supply amount (volume) of the aqueous pigment dispersion obtained in the step [3]/the capacity of the rotor], multiplied by 100, is from 1,000% to 8,000%, and a centrifugal acceleration of the cylindrical centrifugal separation apparatus is from 8,000G to 20,000G.

## INTERNATIONAL SEARCH REPORT

| International application No. |
| --- |
| PCT/JP2019/019470 |

| A. CLASSIFICATION OF SUBJECT MATTER |
| --- |
| Int.Cl. C09D17/00(2006.01)i, B01F9/22(2006.01)i, C09C3/04(2006.01)i, C09C3/10(2006.01)i, C09D11/322(2014.01)i |
| According to International Patent Classification (IPC) or to both national classification and IPC |

| B. FIELDS SEARCHED |
| --- |
| Minimum documentation searched (classification system followed by classification symbols) |
| Int.Cl. C09D17/00, B01F9/22, C09C3/04, C09C3/10, C09D11/322 |

| Documentation searched other than minimum documentation to the extent that such documents are included in the fields searched |
| --- |
| Published examined utility model applications of Japan     1922–1996 |
| Published unexamined utility model applications of Japan   1971–2019 |
| Registered utility model specifications of Japan           1996–2019 |
| Published registered utility model applications of Japan   1994–2019 |

| Electronic data base consulted during the international search (name of data base and, where practicable, search terms used) |
| --- |
|  |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 2012-219144 A (DIC CORP.) 12 November 2012, examples, paragraph [0044]<br>& US 2012/0329931 A1, examples, paragraph [0097] | 1–8<br>9–11 |
| Y | JP 2017-114926 A (DIC CORP.) 29 June 2017, examples<br>(Family: none) | 9, 11 |
| Y | JP 2014-136777 A (DIC CORP.) 28 July 2014, paragraph [0056]<br>(Family: none) | 10 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17.06.2019 | 02.07.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003226832 A